# EUROPEAN PATENT APPLICATION

(11) **EP 2 088 750 A1**
(43) Date of publication of application: **12.08.2009**
(21) Application number: 08002390.6
(22) Date of filing: 08.02.2008
(51) Int. Cl.: H04L 29/08

(54) **Global query manager and ubiquitous gateway for object search**

(71) Applicant: NTT DoCoMo, Inc., Chiyoda-ku Tokyo 100-6150 (JP)
(72) Inventor: Ochi, Daisuke, 80469 München (DE); Kellerer, Wolfgang, 82256 Fuerstenfeldbruck (DE); Widmer, Joerg, 81539 München (DE); Berndt, Hendrik, 85399 Halbergmoos (DE)
(74) Representative: Stöckeler, Ferdinand

(57) **Abstract**

A Global Query Manager (100) for operating in a mobile communication network having a plurality of Ubiquitous Gateways, a Ubiquitous Gateway being a mobile device adapted for communicating in the mobile communication network and for storing object records. The Global Query Manager (100) comprises a means (110) for communicating with the plurality of Ubiquitous Gateways and the means (110) for communicating being adapted for detecting an object record received from a Ubiquitous Gateway. The Global Query Manager (100) further comprises an object cache (120) for temporarily storing an object record reported by a Ubiquitous Gateway, the object record comprising an object record identification, an object identification and an object location. Moreover, the Global Query Manager (100) comprises a controller (130) adapted for receiving a record request for a query object from a query origin and adapted for forwarding the record request to a query Ubiquitous Gateway, wherein the controller (140) is adapted for selecting the query Ubiquitous Gateway based on an object record from the object cache (120).

## Description

The present invention is in the field of object queries in communication networks, as it increasingly becomes an issue along with the growing acceptance of electronical identification.

Mobile phones allow for the mediation between virtual information in a global network, as for example a cellular mobile communication network and real world information in a local network, i.e. a ubiquitous network around the mobile phone, for example a sensor network, as they have global connectivity and near field connectivity. In this respect, mobile phones are often referred to as Ubiquitous Gateways (UG = Ubiquitous Gateway). Service providers leveraging this Ubiquitous Gateway functionality can save on the costs for deploying a separate sensor infrastructure, which is especially expensive for large area coverage up to services spanning whole countries.

It is difficult to track or search real world objects as these objects are not connected to a global network, such as the Internet or a telecommunications network. Current object tracking or object searching solutions, e.g. using RFIDs (RFID = Radio Frequency Identification) to tag objects, work in specific, limited domains only such as supermarkets, CD stores (CD = Compact Disc) or other distribution management domains. However, these concepts provide no tracking or searching solutions in larger areas such as the unit of a city or a solution that is not bound to a certain specific class of objects. Reasons include the cost of deploying appropriate, large scale search infrastructures and networking cost of tracking a high number of objects.

Recently, mobile phones equipped with a Near Field Communication function (NFC = Near Field Communication), also referred to as UGs, have become widely used. As mobile phones already come with a global infrastructure, i.e. the cellular network, they can be used to search or track tagged objects without deploying dedicated sensors around a larger area.

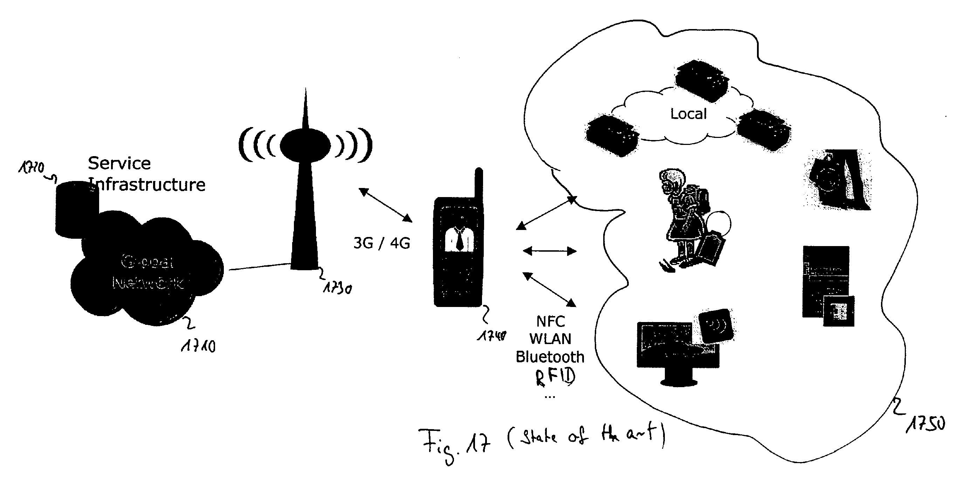

Fig. 17 illustrates a conventional scenario, wherein a global network 1710, for example a mobile communication network is depicted on the left-hand side. The global network 1710 offers a service infrastructure 1720 and utilizes for example base stations 1730 to communicate using wireless communications with a mobile device 1740. The wireless communication may be carried out on the basis of third or fourth generation mobile communication systems, such as for example GSM (GSM = Global System for Mobile Communication), UMTS (UMTS = Universal Mobile Telecommunication System), LTE (LTE = Long Term Evolution), WLAN (WLAN = Wireless Local Area Network), etc.

The mobile device 1740 may be considered as a Ubiquitous Gateway, as it may also operate several additional interfaces using for example wireless communications standards or mechanisms as WLAN, Bluetooth, RFID (RFID = Radio Frequency Identification), ISM (ISM = Industrial, Scientific and Medical radio frequencies), other type of NFC (NFC = Near Field Communication), etc.

As indicated in Fig. 17, the mobile device 1740 may use said communication technologies to communicate with real world objects 1750 among them, for example, local networks, tagged objects as RFID-tagged bags, electronic equipment, etc. The spectrum of real world objects is not limited in any way, as RFID tags, for example, can be used with any object, e.g. even for people as indicated by the sketch on the right-hand side of Fig. 17, even school children may be tagged. The mobile device may further be equipped with sensors for monitoring physical measures, means for personal area networks (PAN = Personal Area Network), means to monitor tagged objects/persons, Bluetooth beacons, etc. In addition, the global network 1710 may refer to a global information network as for example an IP-based cellular network (IP = Internet Protocol), the World Wide Web, Internet, etc.

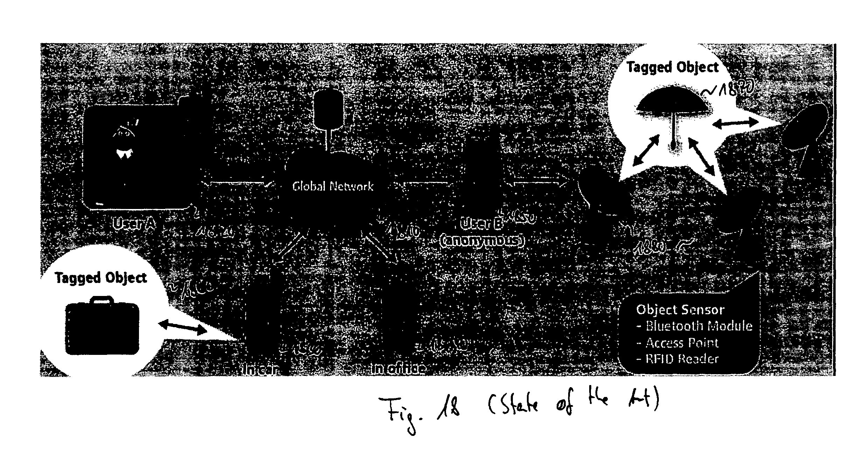

Fig. 18 illustrates another scenario describing a conventional system. Fig. 18 shows a global network 1810, to which a number of mobile devices are connected. Among them for example, user A 1820, a car 1830, an office 1840, and a user B 1850. Additionally, Fig. 18 shows a tagged object 1860 which may be able to communicate with the mobile device 1830 and another tagged object 1870, which may communicate through another network 1880 with user B 1850. The other network 1880 may be a PAN, comprising access points, RFID readers, object sensors, Bluetooth modules, etc.

The scenario depicted in Fig. 18 illustrates how mobile communication may be helpful in finding misplaced, lost, or stolen items via a mobile network, the global network 1810, respectively. For example, lost items may be detected or corporate equipment may be found, for example on a campus, among coworkers, officials, training personal, etc. Furthermore, personal items may be searched at home, in a car, at work remotely, or items lost anywhere.

A "Simple Query" solution sending queries to all UGs in a larger area, for example a city, in order to search for an object, would lead to a high network load making such a search based on mobile phones disadvantageous. On the other hand, solutions based on a "Simple Update" concept are also problematic in that every mobile phone observes all objects around it, periodically sending any change of such object status to a central server, as this again would lead to a high network load with an additional high battery consumption of the mobile phone. Various research papers argue in favor of the relevance of locating real world objects, monitoring the presence of items, or avoiding their loss. Many such systems, however, suggest a specific pre-installed object sensing infrastructure, which is costly to implement and maintain.

Some of these systems are proposed in Gaetano Borriello, Waylon Brunette, Matthew Hall, Carl Hartung, and Cameron Tangney; Reminding about tagged objects using passive RFIDs; In Proceedings of the 6th International Conference on Ubiquitous Computing (UbiComp'04), Nottingham, England, September 2004;
Christian Decker, Uwe Kubach, and Michael Beigl. Revealing the retail black box by interaction sensing; In 3rd International Workshop on Smart Appliances and Wearable Computing (SAWC'03) at ICDCS'03, Providence, RI, USA, May 2003;
Hirobumi Shimizu, Osamu Hanzawa, Kenichiro Kanehana, Hiroki Saito, Niwat Thepvilojanapong, Kaoru Sezaki, and Yoshito Tobe; Association management between everyday objects and personal devices for passengers in urban areas; Demonstration Abstract in Adjunct Proceedings of Pervasive'05, Munich, Germany, May 2005;
Roy Want, Kenneth P. Fishkin, Anuj Gujar, and Beverly L. Harrison; Bridging Physical and Virtual Worlds with Electronic Tags; In Proceedings of the ACM SIGCHI Conference on Human Factors in Computing Systems (CHI'99), pages 370-377, Pittsburgh, PA, USA, May 1999;
Kok Kiong Yap, Vikram Srinivasan, and Mehul Motani. MAX: Human-centric search of the physical world; In Proceedings of the 3rd International Conference on Embedded Networked Sensor Systems (SENSYS'05), San Diego, CA, USA, November 2005.

Reminder systems focus on notifying users before a loss takes place. Generally, however, it can also be assumed that tagged objects will often intentionally be left behind and therefore in such scenarios, immediate notification may not always be desirable.

An object search system could also be implemented by proactively sending all sensor readings to a centralized database, which can later be queried when the object needs to be located. This solution can be referred to as the simple update solution. Such a system would face a formidable scalability challenge of a global data collection system, such as IrisNet, cf. Phillip B. Gibbons, Brad Karp, Yan Ke, Suman Nath, and Srinivasan Seshan. IrisNet: An architecture for a worldwide sensor web; IEEE Pervasive Computing, 2(4), 2003; or HourGlass cf. Peter Pietzuch, Jonathan Ledlie, Jeffrey Shneidman, Mema Roussopoulos, Matt Welsh, and Margo Seltzer; Network-aware operator placement for stream-processing systems; In Proceedings of the 22nd International Conference on Data Engineering (ICDE'06), Atlanta, GA, USA, April 2006.

Some research on distributed sensing systems also advocate the use of mobile phones and the mobile communication network infrastructure, cf. J. Burke, D. Estrin, M. Hansen, A. Parker, N. Ramanathan, S. Reddy, and M. B. Srivastava. Participatory sensing. In SENSYS'06Workshop onWorld-Sensor-Web: Mobile Device Centric Sensor Networks and Applications (WSW'06), Boulder, CO, USA, November 2006;
Shane B. Eisenman, Gahng-Seop Ahn, Nicholas D. Lane, Emiliano Miluzzo, Ronald A. Peterson, and Andrew T. Campbell; MetroSense project: People-centric sensing at scale. In SENSYS'06 Workshop on World-Sensor-Web: Mobile Device Centric Sensor Networks and Applications (WSW'06), Boulder, CO, USA, November 2006;
SensorPlanet. www.sensorplanet.org, 2007;
Dirk Trossen and Dana Pavel; Building a ubiquitous platform for remote sensing using smartphones; In Proceedings of the 2nd Annual International Conference on Mobile and Ubiquitous Systems: Networks and Services (MobiQuitous'05), pages 485-489, July 2005.

However, none of these concepts targets applications where objects are searched, rather than selecting arbitrary sensor information from various user carried devices. In C. Frank, P. Bolliger, F. Mattern and W. Kellerer; The Sensor Internet at Work: Locating Everyday Items Using Mobile Phones; Submitted to Elsevier Mobile and Pervasive Computing Journal, 2007; a scoping mechanism based system solution is presented. The mechanism narrows the search focus from a large scale global domain, as for example world wide, to a local domain as for example a few cells of a cellular system by information evaluation about a user. This information may include the user's moving history, his favorite places, family and friend's information, and the context when the object was last seen. Based on such information, a local domain can be selected. The so-called scope, the search query can then be sent to UGs in this local domain. The mainly investigated proposed mechanism has the disadvantage that the last seen position, if available at all, can be very coarse grained, such as for example a few cells, and within the local domain, just some UGs around the position are randomly selected and the queries installed to them.

In M. Grossglauser, M. Vetterli; Locating Nodes with EASE: last Encounter Routing in Ad Hoc Networks through Mobility Diffusion; In Proceedings IEEE INFOCOM 2003, Last Encounter Routing (LER = Last Encounter Routing) has been developed for IP routing in ad hoc networks based on last seen information, i.e. the last encounter. Its principles can also be applied for local real world objects instead of IP addresses of ad hoc nodes. In the LER algorithm, each node periodically observes other nodes in its vicinity by NFC and stores the last encounter position and time, where and when the node met other nodes, as the last encounter history. When a node N_{S} wants to send a packet to a node N_{D}, N_{S} acts as a first anchor point and asks the last encounter history of N_{D} to other nodes in its vicinity by recursive flooding. After finding a last encounter history, N_{S} sends a packet towards one node at the last encounter position using position-based multi-hop routing and sets this node as a new anchor point. The new anchor point then performs the same process as N_{S} did. Eventually the packet is delivered to N_{D}. A disadvantage of this concept is that recursive flooding takes time, and therefore the query success time can be rather long.

An approach to improve the search for information in ad hoc networks is to replicate the information stored on one node in its close, for example k-hop neighbors. This approach is similar to the Zone Routing Protocol in ad hoc networks (ZRP = Zone Routing Protocol), compare Z.J. Haas and M.R. Pearlman, The Performance of Query Control Schemes for the Zone Routing Protocol, IEEE/ACM Trans. Networking, 9, 2001. It has been applied to peer-to-peer applications in ad hoc networks, cf. zone based peer-to-peer.

It is the object of the present invention to provide an improved concept for querying an object in a network.

The object is achieved by a Global Query Manager (GQM = Global Query Manager) according to claim 1, a method claim for querying according to claim 17, a Ubiquitous Gateway according to claim 19, a method for communicating according to claim 43, and a system according to claim 45.

The present invention is based on the finding that the functionality of Ubiquitous Gateways, as for example mobile phones, can be leveraged, and a system and a mechanism to support searching for real world information such as the location of real world objects can be provided, based on gathering and storing real world information through UGs. Embodiments can simultaneously provide the advantage of low network loads and low battery consumption. Communication among mobile phones or Ubiquitous Gateways can be local through near field communication and global through the cellular network. Therefore, the network traffic, including the number of queries and information updates, can be reduced through additional information that is possibly shared locally among mobile phones or Ubiquitous Gateways, but objects can still be found in a short period of time. Furthermore, embodiments can provide the advantage that they can be adapted to application requirements determining if local information exchange, information caching, or global network use is more beneficial.

Embodiments may utilize a reactive, i.e. query based approach, as the number of sensor readings, as for example, object X seen by sensor A can be expected to be much larger than the number of queries. Embodiments may augment this reactive approach with a local proactive information update among physically close mobile phones, i.e. Ubiquitous Gateways, but may not intend to maintain all sensing information at a central database. Embodiments can take advantage of the cellular infrastructure for improved search routing. Advantages can be achieved by considering information stored on the queried mobile phone or Ubiquitous Gateway in order to improve the search query. Embodiments may also be used with another system, such as LER, where the other system may provide a good approach for narrowing the scope search to a certain domain. Moreover, embodiments may be applied to such conventional algorithms in order to enhance the query by converging faster with less overhead.

Embodiments may, therefore, provide the advantage that they save battery consumption, as Ubiquitous Gateways may observe nodes in their vicinity and may not exchange any information among other nodes. A global location database can be used to enhance position based multi-hop routing paths by routing through a global network, i.e. cellular path to reduce overhead and speed up search. Moreover, embodiments may install several queries in parallel around a target anchor point location to avoid search unable periods while an anchor is changing. In embodiments, data on available information or objects may be shared locally in order to improve the search for objects.

Embodiments of the present invention allow searching of real world objects without the need to install an infrastructure for object sensing, as mobile phones or UGs can be leveraged to act as object sensors mediating between local networks and global or cellular networks. Based on information about objects cached on mobile phones, for example, embodiments may enable the finding of objects faster and with less networking overhead than other comparable solutions as for example "simple query", "simple update", or "random query" installation methods.

Embodiments can provide the advantage that no exchange of cache information may be carried out, as reactive concepts are established. Therefore, embodiments can enhance the privacy of UGs or mobile phones and save battery consumption. Moreover, embodiments may reduce the search latency through usage of the global network instead of multi-hop routing. UGs may only be used for sensing so multi-hop communication for query routing can completely be avoided in some embodiments. Therefore, embodiments may also work with unconnected ad hoc networks. With embodiments, the network load during a query process can be kept lower than with conventional concepts, as for example simple query, simple update, and random query installation. Moreover, embodiments may achieve a lower latency than LER and may also be able to track moving objects.

Embodiments may basically be used in any environment as they enable the reduction of, for example, expensive NFC communication when battery life is important. Moreover, embodiments also work in temporarily fragmented or medium search domains. Embodiments may also be used for other use cases which search for real world information, such as persons, services provided by mobile devices, identifiers such as IP addresses (IP = Internet Protocol) and in mobile ad hoc networks. From this perspective, the term object may also refer to information.

In the following, embodiments of the present invention will be described in detail using the accompanying figures, in which:
- Fig. 1a: shows an embodiment of a Global Query Manager;
- Fig. 1b: shows an embodiment of a Ubiquitous Gateway;
- Fig. 2a: shows an embodiment of an object record;
- Fig. 2b: shows an embodiment of a Ubiquitous Gateway record;
- Fig. 3: shows a flowchart of an embodiment of a GQM;
- Fig. 4: shows a flowchart of an embodiment of a query process at a GQM;
- Fig. 5: shows a flowchart of an embodiment of a main loop at a UG;
- Fig. 6: shows a flowchart of an embodiment of an object search query at a UG;
- Fig. 7: shows a flowchart of an embodiment of an anchor query process at a UG;
- Fig. 8a: shows an example scenario;
- Fig. 8b: shows another example scenario;
- Fig. 8c: illustrates an example communication sequence;
- Fig. 9: shows simulation results of the mean query success time versus the UG density;
- Fig. 10: shows simulation results of the global network usage versus the UG density;
- Fig. 11: shows simulation results on the NFC usage versus the object density;
- Fig. 12: shows simulation results on the NFC total usage versus the number of queries per hour;
- Fig. 13: shows the mean query success time versus the object density;
- Fig. 14: shows the mean query success time versus the UG cache size;
- Fig. 15: shows simulation results on the mean query success time versus the object movable rate;
- Fig. 16: shows simulation results on the network cost versus the UG density;
- Fig. 17: shows a state of the art scenario;
- Fig. 18: shows a state of the art block diagram of a mobile communication network; and

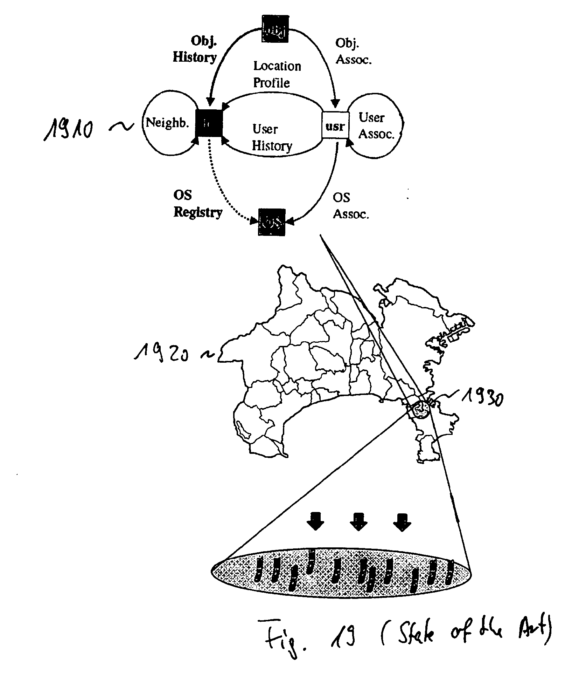

- Fig. 19: shows a state of the art scoping algorithm.

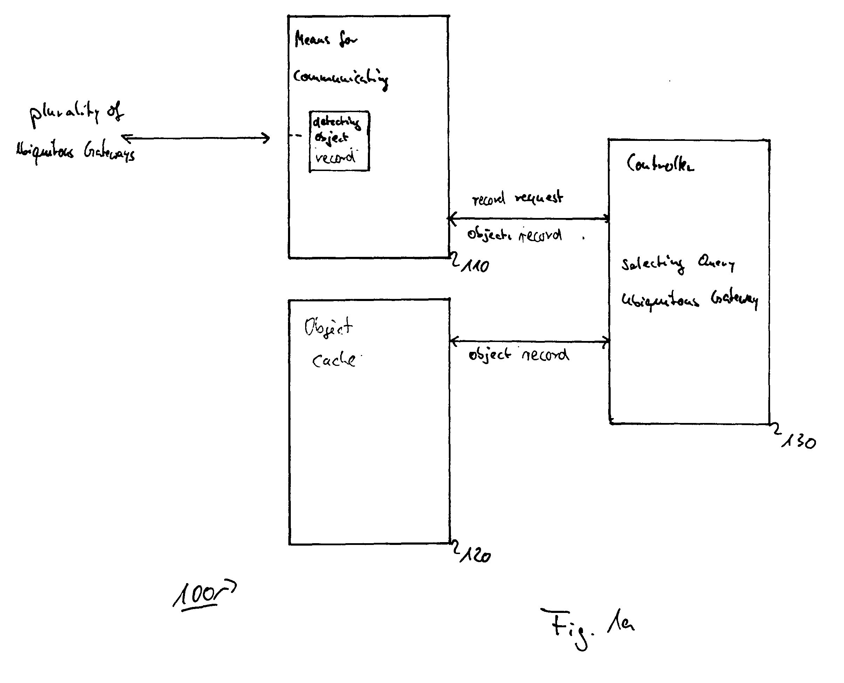

Fig. 1a shows a Global Query Manager 100 (GQM) for operating in a mobile communication network comprising a plurality of Ubiquitous Gateways (UGs), a Ubiquitous Gateway being a mobile communication device being adapted for communicating with the mobile communication network and for storing an object record, comprising a means 110 for communicating with the plurality of Ubiquitous Gateways and wherein the means 110 for communicating is adapted for detecting an object record received from a Ubiquitous Gateway. Moreover, the Global Query Manager 100 comprises an object cache 120 for temporarily storing an object record reported by a Ubiquitous Gateway, the object record comprising an object record identification, an object identification and an object location. Moreover, the Global Query Manager 100 comprises a controller 130 adapted for receiving a record request for a query object from a query origin and being adapted for forwarding the record request to a query Ubiquitous Gateway, wherein the controller is adapted for selecting the query Ubiquitous Gateway based on an object record from the object cache 120.

In embodiments the controller 130 can be adapted for randomly selecting the query Ubiquitous Gateway when no record on the query object is present in the object cache 120. The object cache 120 can be adapted for further storing one of or a combination of the group of a Ubiquitous Gateway record on a Ubiquitous Gateway which has reported an object record, a time stamp of the object last seen time, a period during which the object has continuously been monitored by a Ubiquitous Gateway, an estimated last seen position, whether the object is movable or not movable, a history of Ubiquitous Gateways that have exchanged the object record or a number of hops the object record has propagated. The controller 130 can be adapted for selecting the query Ubiquitous Gateway based on the Ubiquitous Gateway which reported the object record on the query object. The controller 130 may select the query Ubiquitous Gateway based on a query object location stored in the object cache 120. In embodiments, controller 130 may be adapted for installing a search query at the query UG, the query UG using Near Field Communications (NFC) to request an object record for the query object from another UG or the query object as a response to the installed search query, wherein the search query instructs a Ubiquitous Gateway to proactively search for the query object.

The controller 130 may receive an object record based on the forwarding of the record request from the query UG to another UG, the other UG also forwarding the record request. The controller 130 may associate a lifetime with a record request and may be adapted for notifying the query origin when the lifetime of a record request has expired.

The controller 130 can be adapted for forwarding the record request to UGs which are likely to have a newer object record on the query object than the object record on the query object from the object cache 120. Furthermore, the controller 130 may forward the record request to UGs being located in a vicinity of a query object location, where the vicinity can be determined by the mobile communication network, for example through triangulation or from the object cache 120, if an information of the object location for the query object is available from the object cache 120. The controller 130 may forward the record request to a predetermined number of UGs. Furthermore, the controller 130 may install the search query to a predetermined number of UGs. The controller 130 can provide the newest query object location to the query origin, which may for example be a UG or another network node.

In embodiments the means 110 for communicating can be adapted for communicating according to GSM (GSM = Global System for Mobile Communication), UMTS (UMTS = Universal Mobile Telecommunication System), LTE (LTE = Long Term Evolution), FOMA (FOMA = Freedom of Mobile multimedia Access) and/or WLAN (WLAN = Wireless Local Area Network). The means 110 for communicating can be adapted for communicating using a communication protocol, wherein the communication protocol is such that the query object can not communicate using the communication protocol.

Embodiments may comprise a method for querying a Ubiquitous Gateway in a mobile communication network comprising a plurality of Ubiquitous Gateways, a Ubiquitous Gateway being a mobile device adapted for communicating in the mobile communication network and for storing object records. The method may comprise the steps of communicating with the plurality of Ubiquitous Gateways, temporarily storing an object record reported by a Ubiquitous Gateway, the object record comprising an object record identification, an object identification and an object location, and receiving a record request for a query object from a query origin. Moreover, the method can comprise a step of forwarding the record request to a query Ubiquitous Gateway, the query Ubiquitous Gateway being selected based on an object record and a step of reporting an object record on the query object to the query origin.

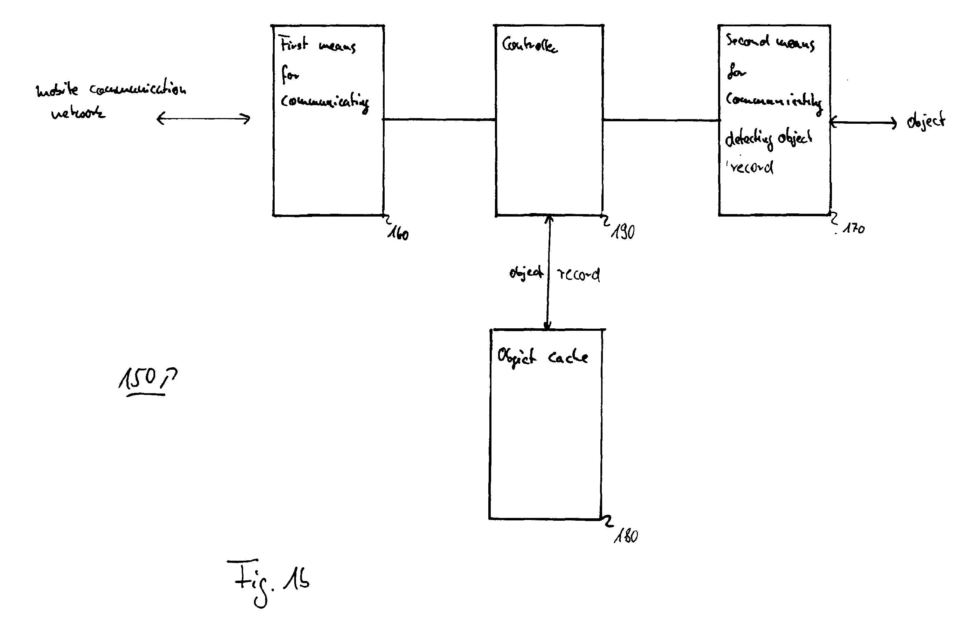

Fig. 1b depicts an embodiment of a UG 150 for communicating in a mobile communication network, the mobile communication network having a plurality of UGs. The UG 150 comprises a first means 160 for communicating with the mobile communication network and a second means 170 for communicating with other UGs and for communicating with an object, an object having an object identification, wherein the second means 170 for communicating is adapted for detecting an object record received from an object. Furthermore, the UG 150 comprises an object cache 180 for temporarily storing the object record, the object record comprising an object record identification, an object identification and an object location. The UG 150 further comprises a controller 190 adapted for repetitively monitoring objects through the second means 170 for communicating and adapted for storing object records of monitored objects in the object cache 180, wherein the controller 190 is further adapted for receiving a record request from the mobile communication network on a query object and adapted for providing an object record on the search object from the object cache 180 to the mobile communication network through the first means 160 for communicating.

In embodiments, the object cache 180 can be adapted for storing a time stamp on when an object was last monitored. Moreover, the controller 190 can be adapted for exchanging the object cache 180 with other UGs through the second means 170 for communicating. The object cache 180 can be adapted for storing a UG identification of a UG which has monitored an object. The object cache 180 can be adapted for storing a belonging period of an object, the belonging period indicating how long the object was monitored. The object cache 180 may further store an information on whether an object is moving or non-moving. Moreover, the object cache 180 can store a route on which an object record was reported, for example it may store a number of hops indicating through how many hops an object record was reported.

In embodiments, the UG may further comprise a UG cache for storing a UG record, the UG record comprising a UG record identification or a UG identification and optionally one of, or a combination of the group of, a UG location, a UG last seen time, an estimated last seen position, an average UG speed, a standard deviation of a UG speed, a history of UGs having forwarded the UG record, or the hop number through which the UG record was reported. The controller 190 may be adapted for reporting the UG record from the UG cache through the second means 170 for communicating to other UGs. The controller 190 may be adapted for receiving a UG record from a UG and for updating the UG cache with a UG record received.

In some embodiments, the controller 190 can be adapted for receiving a search query for a query object from a search query origin and for forwarding the search query to other UGs through the second means 170 for communicating, the controller 190 may be further adapted for attempting to communicate with the query object, wherein the search query instructs the Ubiquitous Gateway 150 to proactively search for the query object. The search query origin may correspond to another UG, or a Global Query Manager, being a network entity of the mobile communication network.

The controller 190 may be adapted for providing the object record on the query object to the search query origin. Moreover, the controller 190 may select the newest object record for providing among multiple object record on the query object, when available, e.g., if multiple other UGs report object records on the query object. The controller 190 may also receive a record query cancellation, and accordingly, forward the record query cancellation to UGs to which it forwarded the query. The controller 190 can be adapted for storing Ubiquitous Gateway identifications of Ubiquitous Gateways to which a record request has been forwarded and requesting cancellation of the record request to all Ubiquitous Gateways to which the record request was forwarded when the query object is found or the record request is cancelled. The controller 190 may be adapted for deleting an installed search query.

In embodiments the controller 190 can be adapted for establishing a limit on how many times a search query can be forwarded. The Ubiquitous Gateway 150 may further comprise a means for determining its own position. The means for determining its own position may comprise a GPS-receiver (GPS = Global Positioning System). The Ubiquitous Gateway 150 can comprise a Bloom filter being prepared with object record and Ubiquitous Gateway record.

In embodiments, the first means 160 for communicating may be adapted for communicating in a cellular mobile communication network. The mobile communication network may correspond to a GSM (GSM = Global System for Mobile Communications), UMTS (UMTS = Universal Mobile Telecommunication System), LTE (LTE = Long Term Evolution), FOMA (FOMA = Freedom of Mobile Multimedia Access), WLAN, etc. network.

In embodiments the second means 170 for communicating may be adapted for using Bluetooth, WLAN, RFID, IR (IR = Infrared), ISM (ISM = Industrial, Scientific and Medical Radio Bands), etc., communications. The means 160 for communicating with the mobile communication network may be adapted for communicating using a communication protocol, wherein the communication protocol is such that the query object can not communicate using the communication protocol. Some embodiments of the present invention may be implemented in systems comprising an embodiment of the above-described GQM 100 and an embodiment of the above-described UG 150.

Leveraging the above-described UG functionalities of for example mobile phones, embodiments may comprise a system and a mechanism to support searching for real world information such as the location of real world objects. This is based on gathering and storing real world information or records through, for example, mobile phones.

Embodiments can be based on a separation of a search for hints about an object's location, in the following also called anchor search, and search for the object. In embodiments, information exchange among UGs or mobiles phones may not be carried out. In other words, embodiments may be based on purely reactive mechanisms to determine more recent information about an object. Furthermore, a global network may be used to stepwise refine local search towards a searched object following these hints by restarting the search at an anchor. In such embodiments, the global network may allow for jumping to better positions, rather than routing there on a multi-hop basis. Similar to LER, compare M. Grossglauser, M. Vetterli, mobile phones or UGs may only store information about last seen objects, but may not propagate them. Embodiments may therefore have the advantage that the amount of NFC traffic may be reduced and battery costs may be saved. NFC interfaces correspond to the second means 170 for communicating in the above description.

Moreover, according to the above description, a Global Query Manager residing in the mobile communication network, respectively the global network, may coordinate the search.

When the GQM receives a search query for an object O_{D}, it chooses a first UG₁ as an anchor point and gets a record on O_{D}, if available, from UG₁. The search query may be received from another UG or respectively from another network or network entity, etc. Basically, UG₁ may be chosen randomly, but if the GQM has some information of a user's behavior pattern, previous search results or similar information in advance, the GQM may filter all possible UGs according to the highest likelihood of places where objects could be found. If UG₁ does not have a record on O_{D}, UG₁ may start flooding an anchor search query using NFC to find an anchor point until UG₂, which has previously met O_{D}, can be found. UG₂ may report a new record about O_{D} location to the GQM. The GQM then chooses some UGs around the new position, and installs an object search query to them. At the same time, the GQM may select one UG₃ from the group of UGs as a next anchor point. UG₃ may again start spreading an anchor search query, etc. This combination of object search and anchor search allows for the finding of O_{D}.

Embodiments therefore provide an efficient concept for object searching or querying in a local domain. Embodiments may also enhance conventional systems as for example the scoping mechanism disclosed by C. Frank, P. Bolliger, F. Mattern and W. Kellerer, making them also useful for a large scale global domain.

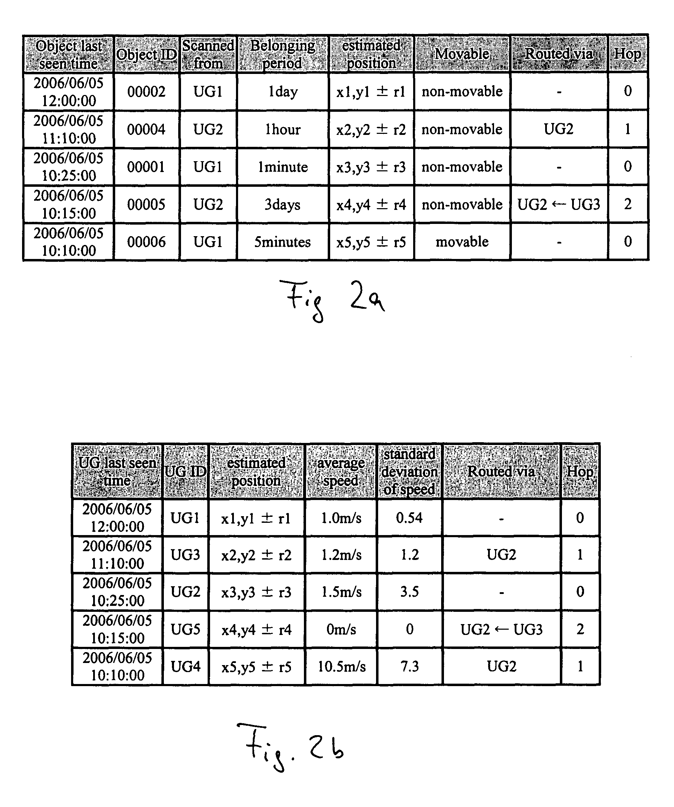

In the following, one embodiment will be described in detail. The embodiment will also be referred to as reactive DIS (DIS = Distributed Information Sharing). The proposed embodiment uses a Global Query Manager, as it was described above, which resides in a local central server in a global network. An embodiment of a UG is assumed, which does not proactively exchange any information with other UGs. However, it could do so in other embodiments of the present invention. Regarding the embodiment described in detail, the UG just stores information about objects which the UG has seen along with a time and a position of the observation. Each involved UG has an object cache, which can contain information about observed objects. An example of possible cache information is illustrated in Fig. 2a.

Fig. 2a depicts an example of an object cache as it was described above. According to Fig. 2a, a record in the object cache may contain one of, or a combination of, the group of an object last seen time, an object identification, and identification of a UG that scanned the object, a period for which the object was continuously observed by the UG, an estimated last seen position, whether the object is movable or not, a history of UGs that propagated this record, a hop number of record propagation, and so on. Since the cache size may be limited, overflowing old records may be discarded.

Throughout the embodiment described at present, it is assumed that the UG does not proactively exchange an information with other UGs, but just stores information about objects which the UG has seen with the time and the position of the observation. But optionally, proactive information exchange among UGs is possible. In this case, load of NFC increases but mean success time of finding object may decrease.

Two types of queries are differentiated that are executed by a UG. A UG may execute an object search query and/or an anchor search query to find a newer record on the possible location of an object.

As an option, embodiments of UGs may additionally have a UG cache, which contains information about observed UGs. Fig. 2b depicts an example of a record in a UG cache which may contain a UG last seen time, a UG identification, an estimated last seen position, an average speed of the UG, a standard deviation of the UG speed, a history of UG which forwarded the record, a hop number, and so on. Since the cache size may be limited, overflowing old records may be discarded.

The UG cache is optional, and it may be stored by each UG, as well as being sent to UG neighbors, for example, to the one hop neighbor, where one hop neighbor may refer to the second means (170) for communicating or NFC. A receiving neighbor may then compare the record to its own record, add missing records, overwrite older own records or discard older received records. The hop count and route of records may accordingly be updated, similar to what was mentioned above, and as the cache size may be limited, old entries may be discarded from the cache. It is again stressed that in the embodiment described at present, the UG cache is optional.

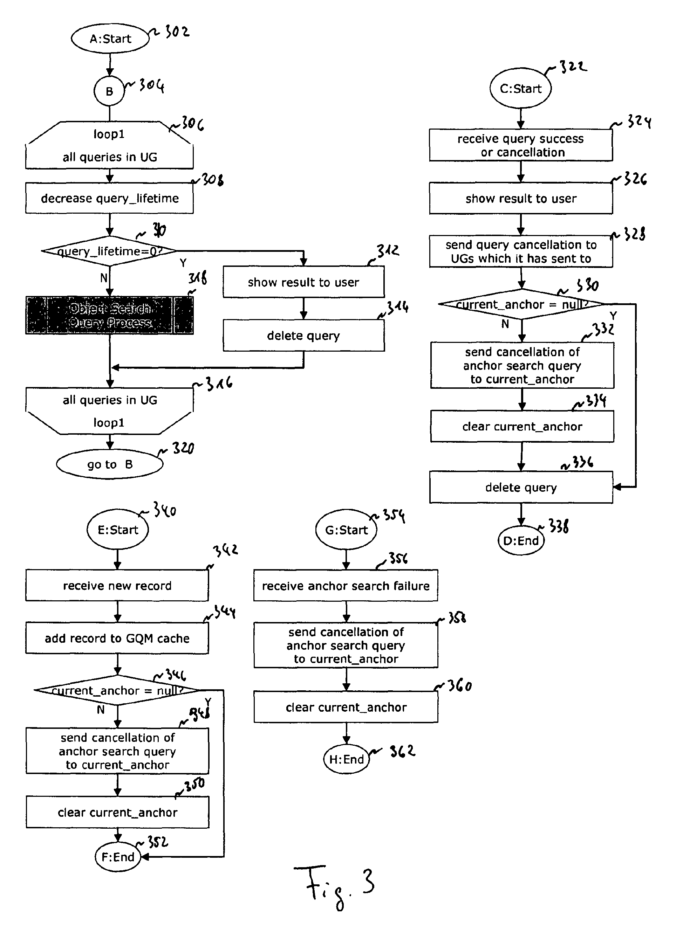

Fig. 3 illustrates a flow chart of an embodiment of a main loop at a GQM. The embodiment of the GQM may continuously execute the flow shown in Fig. 3, even if no query is installed. The flow starts with step 302 which is the starting point, followed by step 304 which is a return point "B". Subsequently, a loop starts in step 306 in which all the queries in a UG are processed. At first, in step 308 within the loop, a counter for the query lifetime namely query_lifetime is decreased. In step 310, the lifetime is checked, i.e. the counter query_lifetime is checked as to whether it has reached 0 yet. If so, in step 312 results are shown to the user and the query is deleted in the following step, being step 314. The loop then ends in step 316, respectively loops through all queries in the UG. If the lifetime has not yet expired, the object search correspondingly searches the query processes as carried out in step 318, before reaching the end of the loop in step 316.

Once all queries have been looped through, the process jumps back to the return point 304 in step 320.

In other words, the GQM executes all installed queries accordingly in the loop between steps 306 and 316. The GQM checks the lifetime of the query in step 310. If it is expired, the GQM notifies the user that the query has failed in step 312, and then deletes the query in step 314. If the query is still alive, the GQM executes the query process in step 318. After executing all queries, the GQM returns to the point "B", i.e. step 304.

On the right-hand side of Fig. 3, another flowchart is shown depicting the behavior of the GQM when a query success or cancellation is received. The flow starts with step 322 followed by step 324 in which the query success or query cancellation is received. In step 326, the results are shown to the user followed by step 328 in which query cancellation, if received, is forwarded to other UGs to which the GQM has sent the queries. In step 330, it is checked whether a current anchor is available, namely by checking whether the variable current_anchor equals null. If not, i.e., if a current anchor is available in step 332, cancellation of the anchor search query is sent to current anchor and the variable current_anchor is cleared in step 334. In step 336, the query is deleted. If in step 330 no current anchor was available, the query can be directly deleted in step 336. The process ends in step 338.

Moreover, Fig. 3 depicts at the bottom left-hand side, another flowchart on the behavior of the GQM, if a new record is received. The flow starts in step 340 followed by step 342 in which the new record is received. In step 344, the record is added to the GQM cache corresponding to the above described object cache. In step 346, it is checked whether a current anchor is available, namely by checking the variable current_anchor for its value. If a current anchor is available, in step 348 cancellation of the anchor search query is sent to said current anchor and in step 350 a variable current_anchor is cleared after which the process ends in step 352. If no current anchor was available in step 346, the process ends immediately in step 352.

In Fig. 3 on the bottom right-hand side, the GQM behavior upon reception of an anchor search failure is described. The process starts in step 354 followed by step 356 during which the anchor search failure is received. In step 358, cancellation of the anchor search query is sent to the current anchor, followed by clearance of the variable current_anchor in step 360 upon which the process ends in step 362.

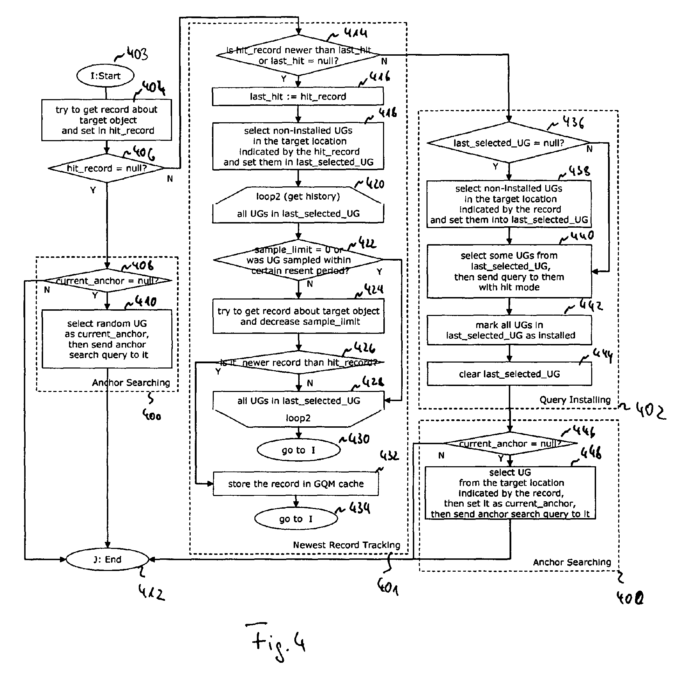

When the GQM receives a query from a user or any network node to search for a query object O_{D}, in the present embodiment, it executes the algorithm shown in Fig. 4. The algorithm exemplified in Fig. 4 comprises three phases, namely, "Anchor Searching" phase 400, "Newest Record Tracking" phase 401 and "Query Installing" phase 402. As already previously mentioned, in this embodiment, UGs may not proactively exchange any cached information, but in reaction to a query, neighboring UGs may be searched whether they can provide newer information about the location of a query object, i.e., when they last saw the query object.

The location is provided by those UGs where the position of the query object is more probable and they are referred to as anchors. An anchor search query is flooded in a network until a newer record about O_{D} is found. If a record is found by an anchor search, a UG around this last seen position in a record is taken as a new anchor point. Several repetitions of the anchor search may be carried out. There are several criteria of the term "newer".

The simplest criterion is that an information generated time T₁ in a record R₁ is just newer than the information generated time T₂ in another record R₂, it means that R₁ is newer, if T₁>T₂. Another criterion may be that the record age A₁, which may be equal to the current time deducted by T₁, is lower than rate α of another record age A₂ which may be equal to the current time deducted by T₂, it means that R₁ is newer if A₁ is less than αA₂, for example, α = ½. In other embodiments other criteria may also be used that are not only time criteria, but also distance criteria. For example, if a generated position of a record R₁ is far away from a generated position of R₂, newness may be compared by comparing T₁>T₂, otherwise compared by A₁ < αA₂. In the following implementation, which was used to generate the simulation results, the first criteria of T₁ > T₂ was utilized.

According to Fig. 4, the query process flow starts from step 403, which is the starting point followed by step 404 in which it is checked if a record about the target object O_{D} is available, and if so, the variable hit_rate record is set accordingly. In the following step 406 it is determined whether such record was available by checking the variable hit_record. The GQM checks whether there is a record about O_{D} in the GQM object cache and sets is accordingly in the value of hit_record. If the GQM, for example, stores a result of a previous search, the GQM may use it. If there is no related record in the cache, the GQM may choose a UG as a first anchor point. Basically, this UG may be randomly chosen, but if the GQM has some information of user's behavior pattern, previous search result, or so on, in advance, the GQM can filter all possible UGs according to the highest likelihood of places where the query object O_{D} could be found.

It then checks in step 408 whether a current anchor is already available, namely by checking the variable current_anchor. If no current_anchor is available in step 410, a random UG is selected as current_anchor and an anchor search query is accordingly sent. If no current anchor is available in step 408, the process ends in step 412. In other words, anchor search queries are flooded among neighboring UGs until a record is found. The current anchor point is remembered in the value current_anchor. The current_anchor is cleared if a record is found by anchor search. If a record is found in step 406, correspondingly, if the GQM has an older record in the GQM cache, the GQM starts the "Newest Record Tracking" phase 401 in step 414.

In step 414, the GQM checks whether the current hit_record is newer than the previous record at the last loop, which is called last_hit. During the first loop, hit_record should be newer as there is no last_hit. The GQM then obtains the last seen position from the hit_record in step 416, and chooses UGs which are around the position and which have not yet installed the query on O_{D} in step 418 and remembers them as last_selected_UG. In step 420, a loop over all UGs in last_selected UGs is then started. In step 422, it is checked whether the sample limit is reached, namely by checking the variable sample_limit, or whether a UG was sampled within a certain recent period. Installing the query multiple times to the same UG should be avoided, and therefore, there should be a certain period between two installations.

In step 424, the GQM attempts to obtain a record about the target object O_{D} and decreases the variable sample_limit, if in step 422 the sample limit is not expired and the respective UG was not sampled within a certain reasonable period. Following step 424, the GQM checks in step 426, if a potentially found record is newer than the hit_record. If this is not the case, the loop is terminated in step 428 and runs across all UGs in the variable last_selected_UG. If a newer record than the hit_record was found in step 426, the process continues in step 432 in which the record is stored in the GQM cache, i.e., the object cache respectively. The process jumps back to the starting point 403 in step 430 following the completion of the loop, or following step 432 in step 434.

In other words, the GQM checks whether the UG is in last_selected_UG has a related record (sampling). If the newer record is found in step 426, the GQM stops checking, stores the record in the GQM cache in step 432, and goes back to the starting point in step 434. When a newer record is found in step 426, one after the other, the GQM updates the newest record. In embodiments, the "Newest Record Tracking" phase 401 may not always be carried out. The GQM may also skip this function and may just use the record which the anchor point reported instead of the newest record. A number of samples may be limited by the variable or value sample_limit, which refers to the remaining number of UGs which the GQM can check for a related record of O_{D}. This value may be determined by the size of the local domain and NFC cost. For example, it may be set to 50.

Finally, when there are no more new records found, i.e., if hit_record equals the last_hit, the GQM ends the query installation phase for O_{D} and starts queries at UGs around the position of the newest record, i.e. the GQM enters the "Query Installing" phase 402. At first, the GQM checks in step 436 whether the last_selected_UG equals null. If no UGs are selected in step 438, the GQM selects known-installed UGs in the target location indicated by the record and sets them into last_selected_UG. The step is followed by step 440 in which some UGs from the last_selected_UG are selected, and queries are sent to them in "hit"-mode, where "hit"-mode indicates that an according object information or object record was hit.

Step 440 directly follows step 436, if the last_selected_UG is not equal to null. The GQM selects all UGs, or some UGs from last_selected_UG stochastically and installs a query to them. For the query a value of query_hop_limit, which may for example be set to 2 may be updated and set in "hit"-mode, and it may contain a record information. In step 402, the GQM marks that all UGs in the last_selected_UG as "already installed" and finally clears last_selected_UG in step 444. The reason for selecting UGs randomly is that they are close to each other and the UG can broadcast the query via NFC in parallel, not using the cellular connection.

After step 444 the GQM may enter the "Anchor Searching" phase 400 which is again depicted in the lower right corner of Fig. 4. It is first checked whether the current_anchor equals null in step 446, and if so, in step 448 a UG is selected from the target location indicated by the record, then the variable current_anchor is set accordingly and a search query is sent to the UG. The process then ends in step 412.

Another embodiment and more sophisticated way alternatively to random selection may be carried out. For example, using a timing the GQM may install one UG, the GQM can obtain neighbor UG information from the UG and avoid selecting these neighbor UGs. The GQM may then continuously monitor the position indicated by a record, and if there is a new non-installed UG, the GQM may send a query. After this, if current_anchor equals null, the GQM may set a UG around a last seen position from the newest record as a new anchor point. It may then again flood the anchor searching queries.

If a new record is reported by object searching query or anchor searching query, the GQM may again execute the "Newest Record Tracking" phase 401 and the "Query Installation" phase 402. The GQM may always search the query object around the newest record. This may also work when the object is moving, because it can follow the newest record immediately.

In embodiments, as a further option, a more efficient search performance may be obtained if the GQM stores a result of a last search to use it as a starting point for a search for the same object, rather than randomly selecting a starting point. Otherwise, if the GQM has some information on a user's behavior pattern, previous search results, etc., in advance, the QGM may filter out possible UGs according to the highest likelihood of places where the object could be found. As a further option, the user who searches the object O_{D} may specify a policy as to how important the search is, for example, if it is not an emergent search, the GQM may reduce the number of query installations, but increase the search success time. In other embodiments, or the other way around, a user may set a greedy policy if spending money does not matter and the search success time should be short.

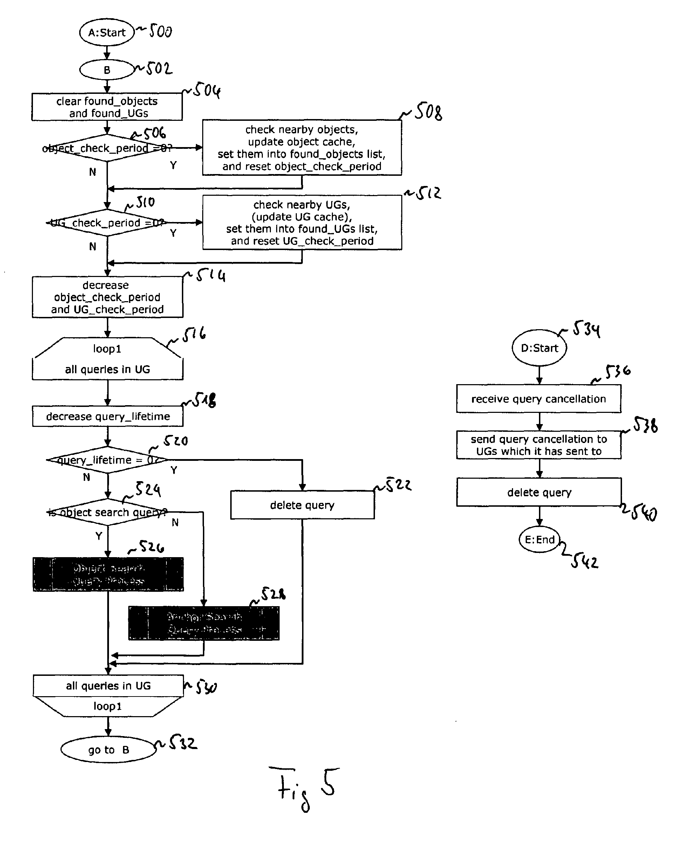

Fig. 5 shows a flowchart of an embodiment of a main loop at a UG. In a scenario, all UGs may execute the main loop shown in Fig. 5. The flow starts from step 500 followed by step 502 as a return point "B". Step 502 is followed by step 504 in which the variable found_objects and the variable found_UGs are cleared. In step 506 it is checked whether the object check period has expired, namely by checking the variable object_checked_period. If so, in step 508, the UG checks for nearby objects, updates the object cache and also sets the according variables found_objects and resets the object_check_period variable. Therefore a UG executing the main loop periodically observes objects in its vicinity, updates its object cache, and stores them into an array found_objects. This period is determined by the value of object_check_period, which is checked in step 506, this period may for example be 1 to 5 minutes.

Similarly to the objects in step 510, it is checked whether the UG checking period has expired, namely by checking the variable UG_check_period. If so, in step 512 nearby UGs are checked, optionally if available, the UG cache is updated, accordingly a list, for example named found_UGs is updated and the UG_check_period is reset. The UG periodically observes UGs in its vicinity and stores them into found_UGs which may be implemented as an array. In the following a UG executing a process will also be termed UG_{EXE}. If a UG_{EXE} has a UG cache, UG_{EXE} may update it. This period is counted or determined by the value UG_check_period.

In the following step 514, the respective counters object_check_period and UG_check_period are decreased. In step 516, a loop over all queries in UGs is started. In step 518 a counter for the lifetime query is decreased, namely query_lifetime. In the following step 520, the lifetime is checked, if the query lifetime is expired, the query is deleted in step 522. If the query is still alive, it is checked in step 524 whether the query is an object or an anchor search query. In the case of an object search query in step 526, the object search or query process is carried out. In case of an anchor search, the anchor search or query process is carried out in step 528. Step 530 ends the loop which runs across all queries in the UG followed by step 532 returning to return point 502. A UG_{EXE} executes all installed queries according to the loop. UG_{EXE} first checks the lifetime of the query in step 520 and deletes the query in step 522, if the lifetime has expired. If the query is still alive, the UG_{EXE} executes the query process after executing all queries, the UG_{EXE} returns to point "B" in step 532.

Fig. 5 illustrates on the right-hand side, the process when the UG receives a query cancellation which starts in step 534 followed by step 536 in which the query cancellation is received. In step 538 query cancellation is sent to all UGs to which the query was forwarded and in step 540 the query is deleted. The process ends in step 542.

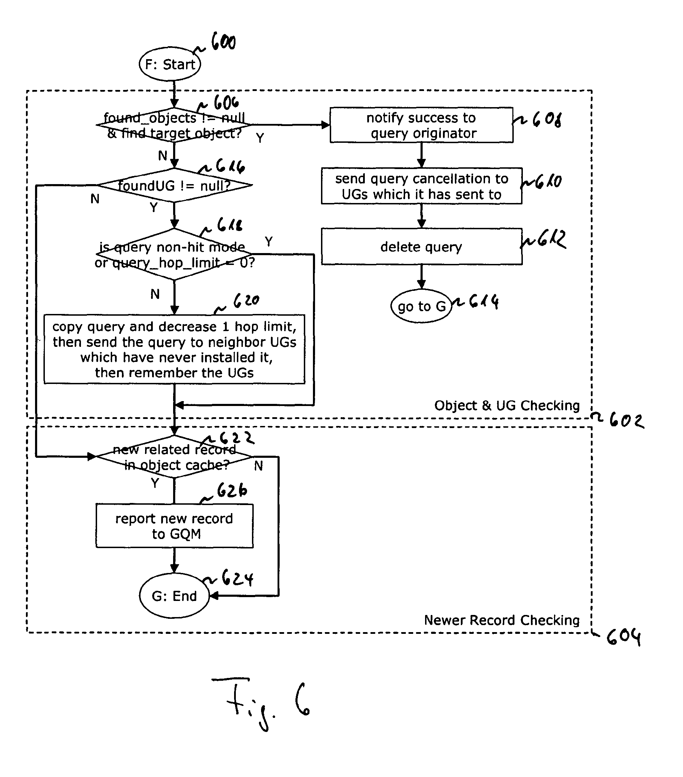

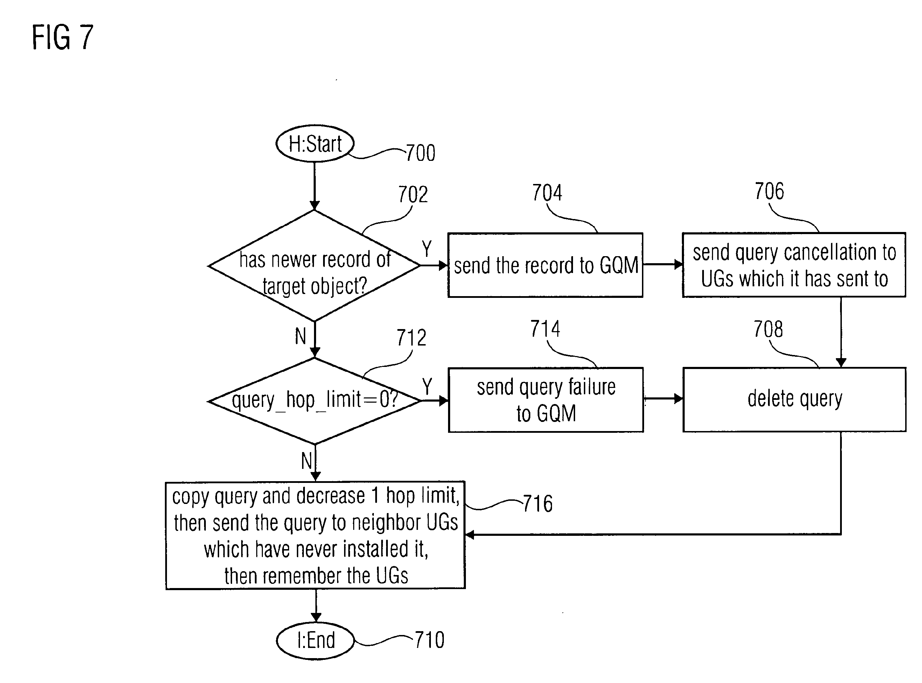

As mentioned above, there are two query processes for UGs. The first is a query process for the object search of which a flowchart of an embodiment is depicted in Fig. 6, and the other is for anchor search for which a flowchart of an embodiment is depicted in Fig. 7.

In the presently described embodiment, when UG_{EXE} receives an object search query, it executes the algorithm in Fig. 6. Fig. 6 depicts the algorithm which starts at point 600 having an "Object and UG Checking" phase 602 that observes objects or UGs in its vicinity and a "Newer Record Checking" phase 604 that checks if there are newer records in the object cache of UG_{EXE}, and sends the record to the GQM.

The flow starts from step 600 or starting point "F". In step 606, it is checked whether the target object is found, which is indicated in Fig. 6 by checking the variable found_objects not being equal to null, and whether the target object is found. If the target object was found, in step 606 the UG notifies the success to the query originator and sends query cancellation to UGs to which it sent the query in step 610. In step 612, it deletes the query and the process ends in steps 614. If a target object is found, UG_{EXE} notifies success to the GQM in steps 608 and then deletes its own query in step 612. If possible, UG_{EXE} requests query cancellation in steps 610 to other UGs to which it sent the query.

If the target object was not found in step 616, the UG checks whether neighbor UGs are found. If the object is still not found, but neighbor UGs are found, the UG checks in step 618 whether the query is "non-hit"-mode or a query hop limit has been reached. If this is not the case, then in step 620 the UG copies the query and decreases the hop limit, and then sends the query to neighbor UGs which have not had the query installed. The UG remembers the UGs which it forwarded or copied the query to. If the query hop limit was reached, or the query is not in "non-hit"-mode in step 618, step 620 is skipped. If the object is still not found, but neighbor UGs are found, UG_{EXE} copies the query to these UGs in step 620. If the query is in "hit"-mode and the query_hop_limit is more than one. The query_hop_limit is a variable to count the remaining times which the query can be propagated, and it might be set by the GQM, for example, the query_hop_limit equals 3. If a neighbor UG has already installed this query, the UG_{EXE} does not send a query again in the present embodiment.

If no neighbor UGs are found in step 616, respectively following step 618 or step 620, the UG enters the "Newer Record Checking" phase 604. At first in step 622, the UG checks whether a newer related record is in the object cache. If not, the process ends in step 624. If there is a new record in the object cache, the UG reports the new record to the GQM in step 626 before ending the process in step 624. In the "Newer Record Checking" phase 604, the UG checks whether a new record about O_{D} is in the object cache. If there is a new record, UG_{EXE} reports the record to the GQM in step 626. After receiving the record from the UG_{EXE}, the GQM reflects it to the object cache in the GQM, which is described in Fig. 3 in steps 340 to 352. The GQM then executes the "Newest Record Tracking" phase 401, according to Fig. 4 and the "Query Installing" phase 402 according to Fig. 4.

When a UG_{EXE} receives an anchor search query, it may execute the algorithm of which a flowchart is depicted in Fig. 7. An anchor search query searches for information about a target object O_{D} and its last seen time. The search may always look for newer records about O_{D} than the last seen time. The flowchart depicted in Fig. 7 starts at the starting point 700 respectively "H". The UG_{EXE} then checks in step 702 whether there is a new record about O_{D} in its object cache. If there is a new record in the object cache, the UG_{EXE} reports the record to the GQM in step 704. In the following step 706, the UG_{EXE} sends query cancellation to UGs to which it sent the query, i.e., it recursively requests query cancellation to these UGs and then deletes its own query in step 708.

The process then ends in step 710. If there is no related record on O_{D} in step 702, the UG_{EXE} checks the query hop limit, i.e., the variable hop_limit in step 712. If the hop_limit is reached, i.e., if the query_hop_limit variable equals null, a UG_{EXE} notifies failure of the anchor search to the GQM in step 714 and then deletes its own query in step 708. Otherwise, the UG_{EXE} forwards an anchor searching query with hop_limit decreased in step 716, and sends it to UGs in its vicinity. Thus, in step 716, the query is recursively sent and finally a newer record on O_{D} is found. In step 716 the query only gets copied to neighbor UGs which did not have the query installed before. The UGs on which the query has been installed will be remembered. Following step 716, the process ends in step 710.

When a GQM receives a record on O_{D} as a success report of an anchor search, the GQM reflects the record into the object cache in the GQM as it is indicated with the steps 340 to 352 in Fig. 3. The GQM then requests query cancellation to the current_anchor UG and clears current_anchor, compare steps 340 to 352 in Fig. 3. If the GQM receives an anchor search failure, it carries out steps 354 to 362 in Fig. 3. The current_anchor UG recursively floods query cancellation to other UGs to which it sent the query, as indicated in Fig. 5 in steps 534 to 542. Finally, every related UG then deletes the anchor search query in this embodiment.

When the GQM receives success of search from a UG, each UG_{EXE} is requested to cancel the query from the GQM, which is indicated in Fig. 3 with steps 322 to 338. If the UG_{EXE} has sent the query to other UGs, it recursively requests query cancellation to those UGs, and then deletes its own query, as indicated by steps 534 to 542 in Fig. 5.

As an option for this embodiment, each UG may also have a UG cache. In this case, the GQM can use the UG cache to select appropriate UGs around the last seen position. When a GQM selects UGs around the last seen position, the GQM, as usual, uses cell information. In this case, the GQM may have a position inaccuracy or a position error of about 100-500m. Alternatively, the GQM can use the UG cache from some UGs around the last seen position and get a closer UG to the position desired. In this embodiment, the described algorithms may be further improved.

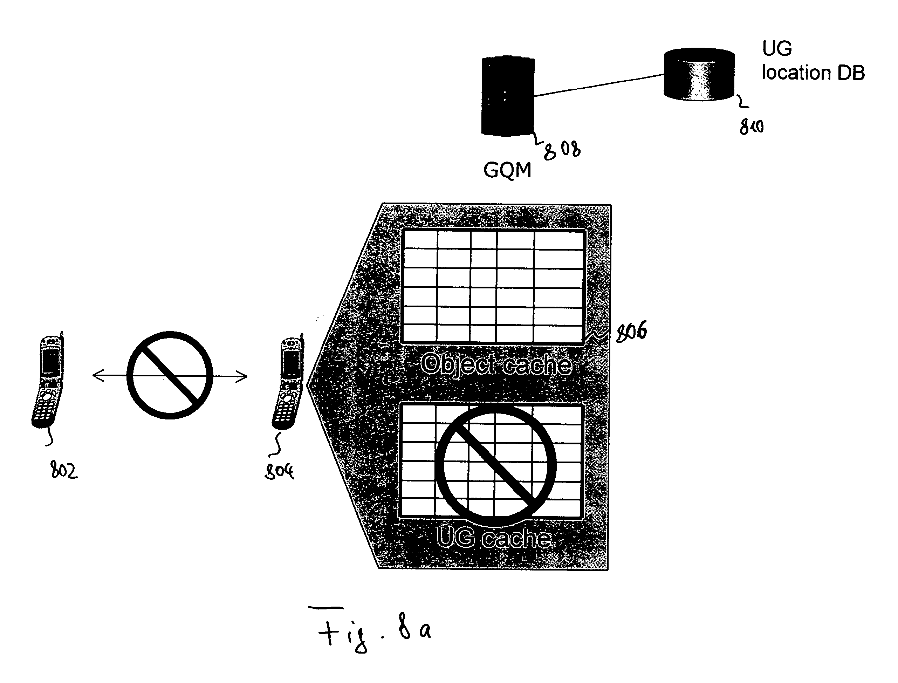

Fig. 8a illustrates a scenario, in which two UGs 802 and 804 are depicted. For the UG 804 it is indicated that it comprises an object cache 806, but it does not comprise a UG cache. Moreover, in Fig. 8a, it is indicated by the crossed arrow between the UGs 802 and 804, that they do not periodically exchange their object caches. Moreover, the scenario shows a GQM 808 and a UG location database 810, which is connected to the GQM and used by the GQM for UG-localization purposes. This scenario indicates that the GQM can obtain information on the UG position from the UG location database 810. According to the above described embodiment, the GQM can determine a UG location during an anchor point search from the UG location database. Furthermore, as previously described, the GQM 808 may install search queries to UGs, in order to find UGs with newer records, or anchor points, which are likely to be closer to the queried object. Once an anchor point, or a respectively a closest anchor point is determined, an object query can be installed to the anchor point.

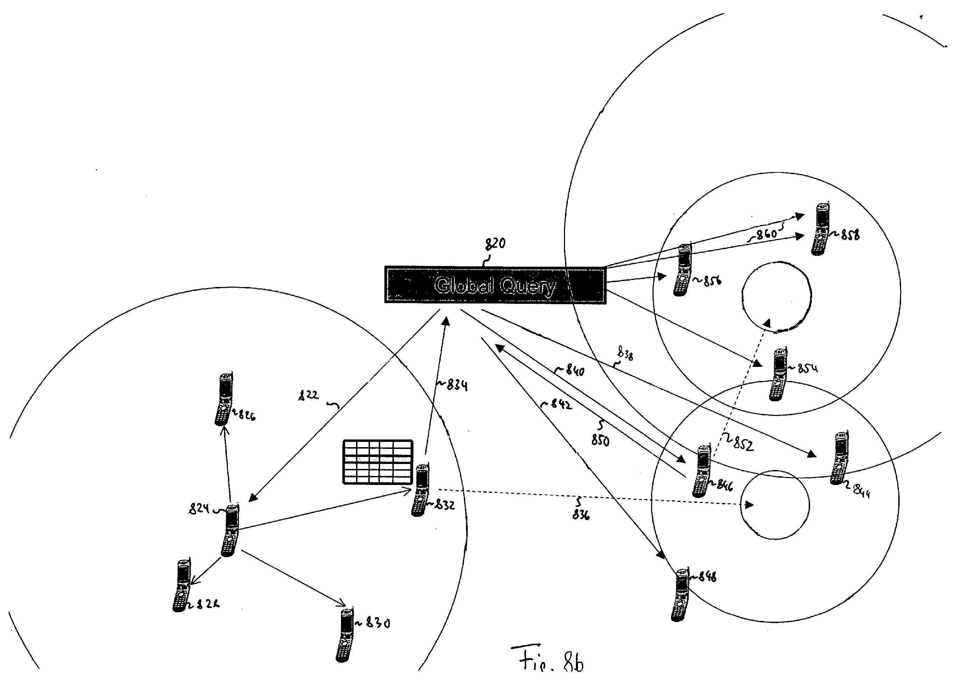

Fig. 8b depicts another scenario comprising a global query manager 820, and a number of UGs which will be used to detail a search procedure in the following. After the GQM 820 has received a query request, it may select a random UG as a first anchor UG, which is indicated by the arrow 822 pointing to the first anchor UG 824. As it is indicated by the arrows pointing from the first anchor UG 824 to the UGs 826, 828, 830, and 832, the anchor search query is spread by the anchor UG 824 until a newer record is found, which is in the example described at UG 832. The UG 832 then notifies the GQM 820 about the next anchor point which is indicated with the arrow 834. Having received the notification about the next anchor point from UG 832, the GQM 820 requests a newer record to UGs around the last seen location. The last seen location is indicated in Fig. 8b by the arrow 836 pointing from the UG 832 reporting a newer record to the last seen position. Having received the notification from UG 832, the global query manager 820 requests newer records from UGs around the new anchor point which is indicated by arrows 838, 840, and 842, pointing to UGs 844, 846, and 848, of which their location can e.g. be known by a UG location database according to Fig. 8a. In the example depicted in Fig. 8b, it is assumed that UG 846 then notifies the GQM 820 about another newer record which is indicated with the arrow 850.

The GQM 820 receives anther notification about an anchor point from UG 846, which location is indicated by the dotted arrow 852 in Fig. 8b. Based on the notification, the GQM 820 selects new anchor points, represented in Fig. 8b by the UGs 854, 856, and 858. According to the procedure described, after receiving the newest record, UG 858 may be selected as the next anchor UG to which a query for the actual query object is installed, indicated by the double arrow 860 in Fig. 8b.

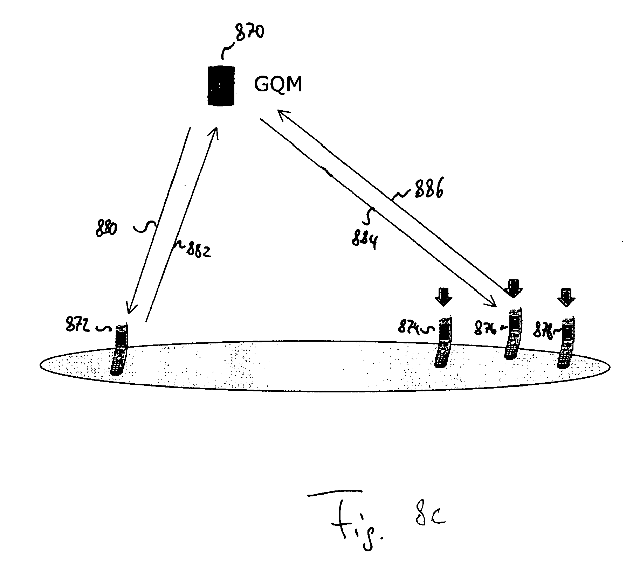

Fig. 8c illustrates another simplified scenario showing a GQM 870 and four UGs 872, 874, 876, and 878. According to the above described mechanisms, the GQM 870 receives a query for a query object and requests UG 872 whether it has a record on the query object which is indicated by the arrow 880. In response, the UG 872 notifies the GQM 870 indicated by arrow 882 that it has a record on the query object and provides the according information. From the information provided by the UG 872, the GQM 870 extracts the location of the query object and based on this location, it selects the next anchor UG 876 which is indicated by the arrow 884. The new anchor UG may report a new record on the query object to the GQM, which is indicated with arrow 886. Assuming that the record of UG 876 is the newest GQM 870 could retrieve, it installs object queries to the UGs 874, 876, and 878, which are all in the vicinity of the location and the newest record. Eventually, the query object is located.

In the following, simulation results will be presented. Simulations have been carried out for four different concepts in a local domain, namely "Simple Query to All", "Simple Query to Random", which is the solution presented by C. Frank, P. Bolliger, F. Mattern and W. Kellerer for a local domain, the embodiment described above also termed "reactive DIS" and LER.

The "Simple Query to Random" solution installs queries at 40% of the UGs in the local domain, which is a default setting of the solution presented in the abovementioned paper. Every solution is simulated under a number of default conditions. With UGs, it is referred to for example, as mobile phones having the capability of global connectivity, as for example capability of communicating in a third generation network, and NFC connectivity. For the NFC range of a UG, 10m were assumed, and the cache exchange frequency of the object cache via NFC was set to 1/60[1/sec]. The sensor range of a UG is 10m, the sensing frequency is 1/60[1/sec]. The simulated area spans 1 km², i.e. 1000m x 1000m. The object density was set to 800 objects/km², objects are not moving by default within the simulations. The UG density is 400 nodes/km², and the UG mobility model is random walk.

The random walk mobility model is characterized by a randomly chosen direction of UG movement, the moving speed is 1m/sec. The moving period is 100sec, and the waiting period after moving is 0sec by default. A UG can determine its own position by a GPS (GPS = Global Positioning System) with a 10m position error. The object cache size in a UG was set to 200 records, the UG cache size was also set to 200 records. If not noted differently, 100 queries were issued in each simulated scenario and each scenario has been simulated several times.

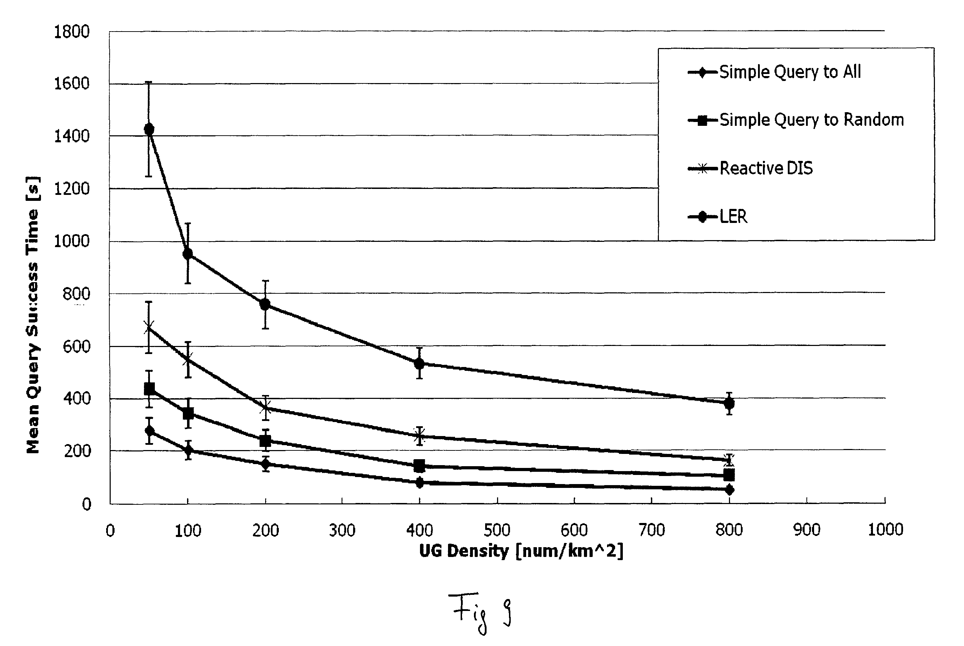

Fig. 9 shows simulation results of the mean query success time versus the UG density. The results are depicted for the average query success time when varying the UG density from 50-800. Comparing the solutions regarding the query success time, the order is "Simple Query to All", which took the shortest average query success time, "Simple Query to Random", the embodiment of reactive DIS and LER, which took the longest mean query success time. However, "Simple Query to All" and "Simple Query to Random" lead to a high network load. The embodiment can achieve closer success time to "Simple Query to Random", having the advantage of resulting in a very low global network load.

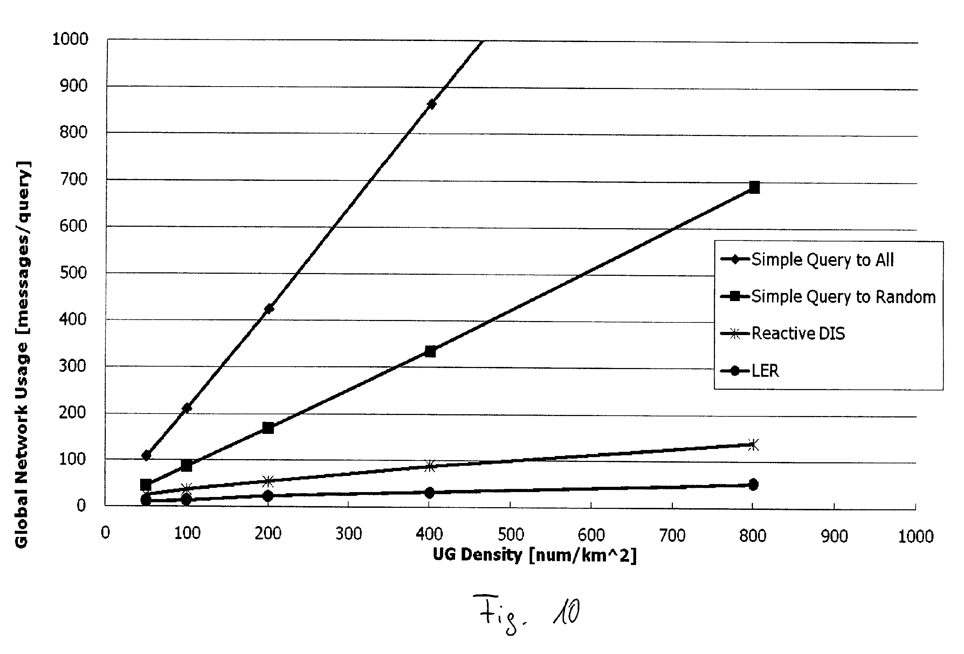

Fig. 10 depicts simulation results on the global network usage versus the UG density. Comparing the different solutions regarding a network load of the global network, LER has the lowest global network load, followed by the embodiment of reactive DIS, "Simple Query to Random", and finally "Simple Query to All". It shows that the embodiment saves much of the global network load when compared to the simple solutions, however achieving closer success time to the "Simple Query to Random". LER only uses the global network when a query is sent to a next anchor, its success time being much worse than the success times of the other solution.

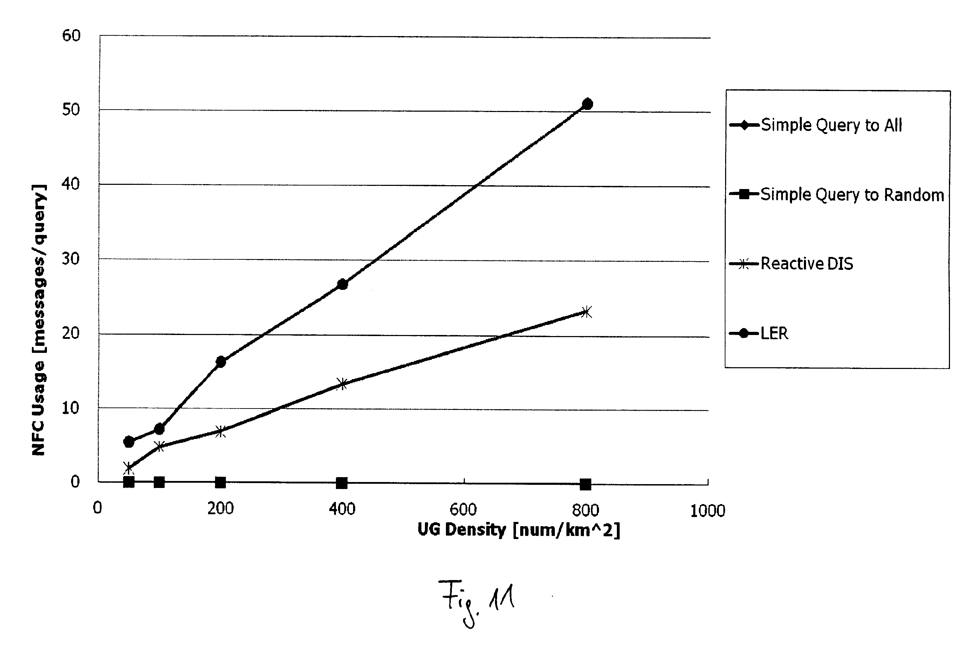

Fig. 11 shows simulation results with respect to the NFC usage versus the UG density. With respect to the network load resulting from NFC usage per query, it can be observed that the embodiment uses NFC communication more than "Simple Query to All" or "Simple Query to Random". This is due to the fact that the embodiment uses NFC actively in order to reduce the global network load. "Simple Query to All" and "Simple Query to Random" do not use NFC at all. The network load of our solution is less than for LER, as the solution reduces anchor search queries and avoids bouncing of the anchor point around the target object. The periodical NFC usage has not been considered in Fig. 11.

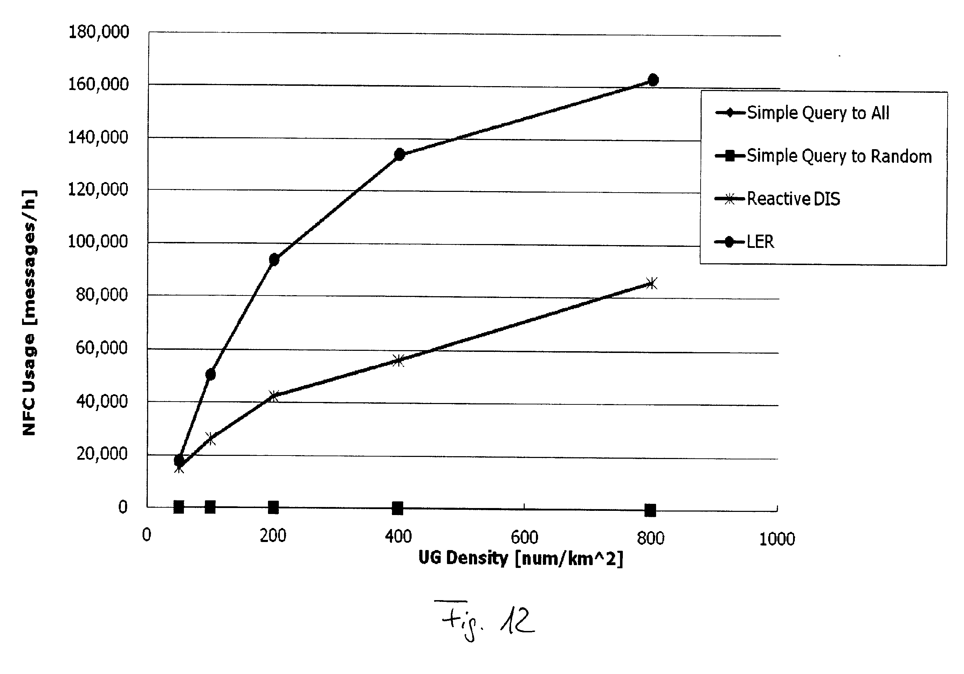

Fig. 12 shows simulation results on the NFC total usage, which also takes periodical usage in account versus the UG density. The average system query frequency is 1000 queries per hour. From the results depicted in Fig. 12, it can be seen that the embodiment of reactive DIS uses only half of the NFC load compared to LER. It can be assumed that the NFC cost is more cost effective than the global network cost. This assumption, can for example, be based on using the battery power consumption as a cost metric. The average power consumption of an NFC, for example between 10mW to 50mW is orders of magnitudes lower than in the global cellular network, which is for example around 1W. In addition, NFC is free to use for the end user. The embodiments therefore provide the advantage that it is very useful to reduce the global network load and get success in a short period of time.

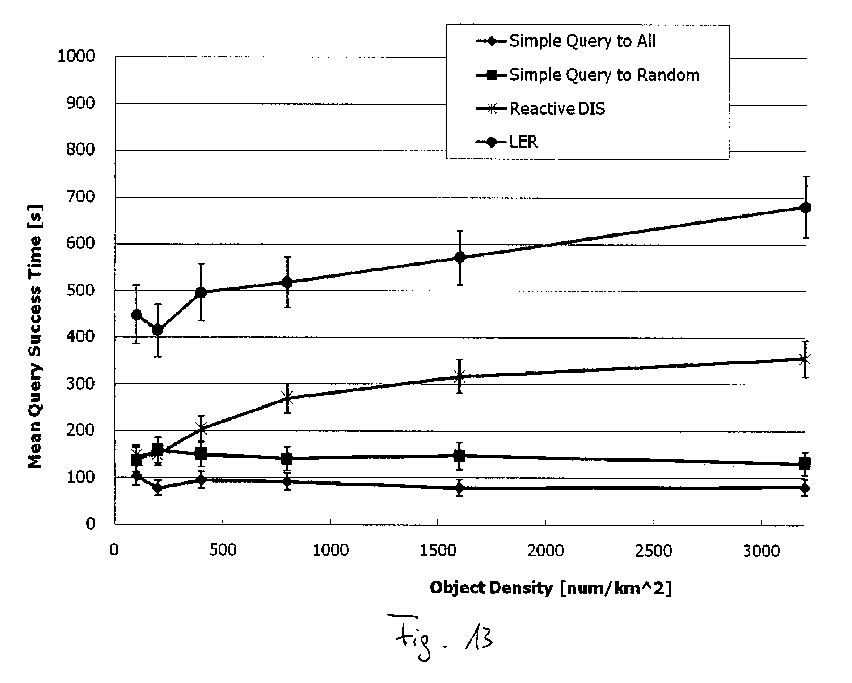

Fig. 13 shows simulation results on the mean query success time versus the object density. Fig. 13 shows the average success time with a varying object density of 100-3200. It can be seen that the query success time of the embodiment of reactive DIS increases with the object density. This results from the limitations of the object cache size at the UG. In other embodiments and for further improvement, the object cache size may be changed and dynamically adapted to the number of observed objects.

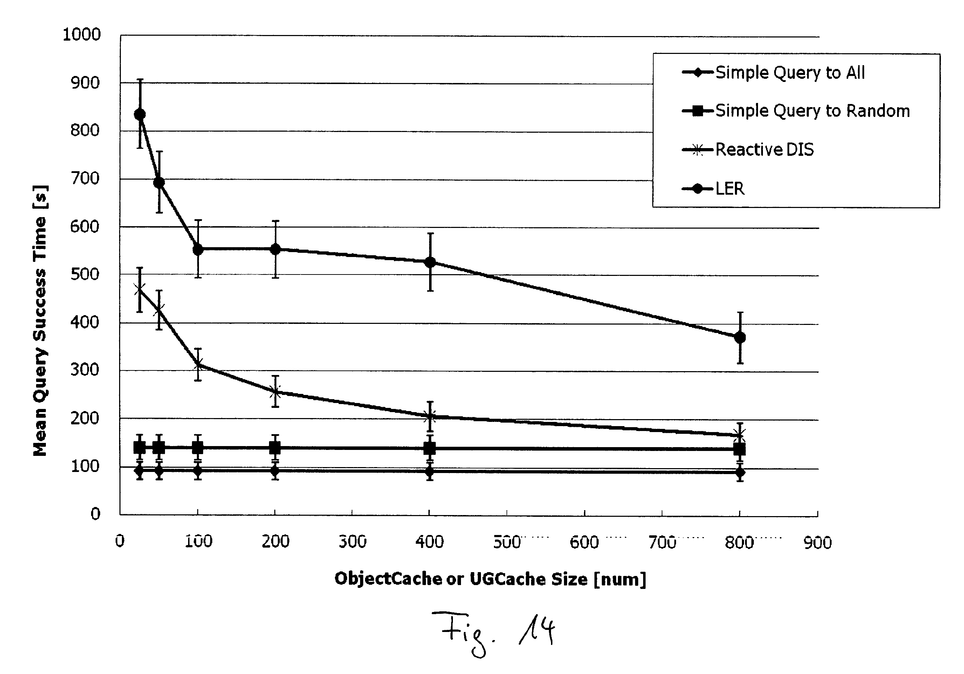

Fig. 14 shows simulation results of the mean query success time versus the UG object cache size. Fig. 14 depicts the query success time with a varying object cache size at the UG between 25-800. From this figure, the object cache size does not influence the query success time much after a certain cache size is reached. In this scenario, for example, a cache size of 200 appears to be sufficient for a population of 800 objects/km².

Moreover, the average query success time can be evaluated by considering moving objects. In the simulations carried out, objects move with a random walk, meaning every UG determines a random angle, a fixed speed, a fixed walking period and a no waiting period after walking. For the following simulation, the speed is set to 21m/s, the walking period is set to 100s, and the waiting period is set to 0s.

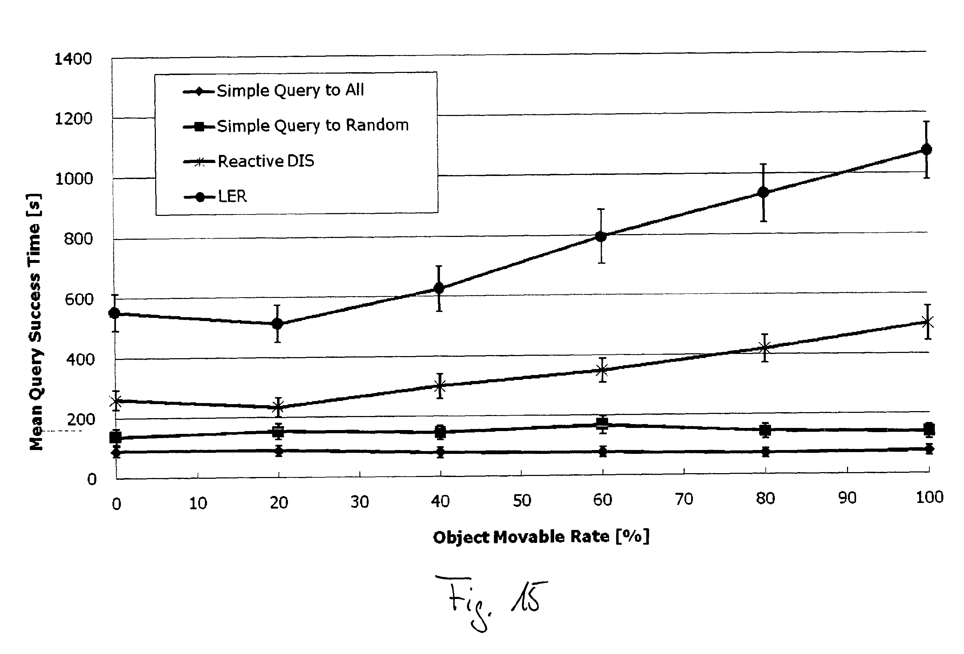

Fig. 15 shows simulation results of the mean query success time versus the object movable rate. The results are shown for a varying rate of mobile objects between 0-100%. Under such hard conditions, the embodiment still receives a much shorter success time and less global network usage than LER.

Embodiments of the present invention therefore outperform conventional algorithms, such as LER for example, and work with closer success time to "Simple Query to Random" with a much lower global network load. Moreover, it can be noted that the simulations presented here were carried out under low UG density, i.e. 400 UGs/km², while real world scenarios can have a higher UG density as for example presented by C. Frank, P. Bolliger, F. Mattern and W. Kellerer. Furthermore, a random walk is somehow the worst walking model that could be assumed. In real world scenarios, some UGs are stable or do not often move, and the walking way is restricted for example by a road. Therefore, even better results can be expected in the real world.

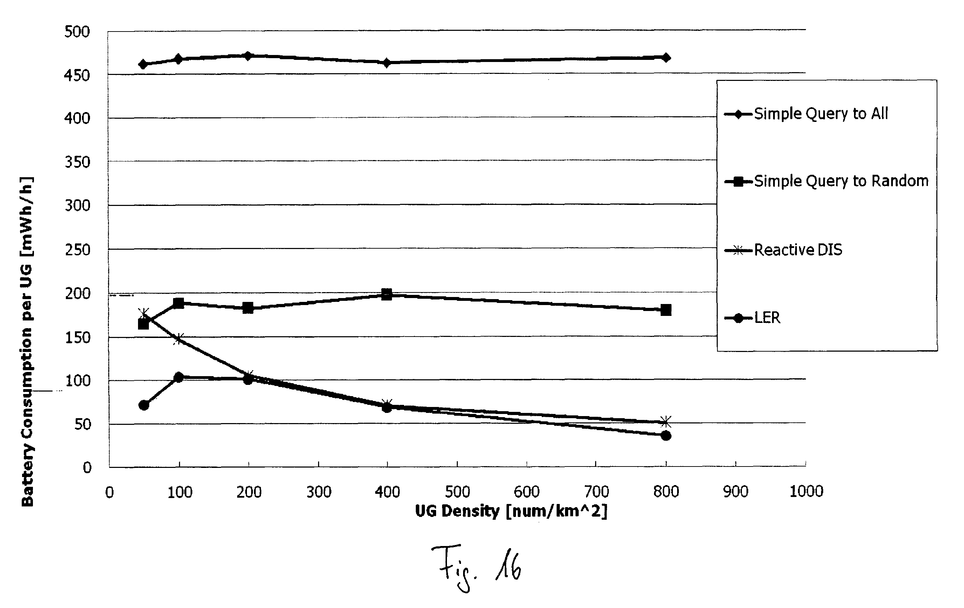

Fig. 16a shows simulation results of the battery consumption versus the UG density. It was assumed that a global network message consumes 800mW/s while NFC a network message consumes 60mW/s. Moreover, it was assumed that 1000 queries occur per hour. Fig. 16 indicates that the battery consumption of the embodiment of reactive DIS is much lower than the battery consumption of "Simple Query to All" or "Simple Query to Random". And, the battery consumption is almost same as the battery consumption of LER, even achieving the advantage of having shorter query success times.

Embodiments can provide the advantage of enabling a cost and time effective query of objects in a communication network. Moreover embodiments can be adapted to the query and network need as they may enable leveraging or balancing between global communication with the communications network and local or NFC communication directly with objects or among UGs without involving the global network. In other words, embodiments provide the advantage that a global network can be used as an umbrella network for a plurality of UGs being capable of also directly communicating with each other, in order to carry out resource effective object queries.

Depending on certain implementation requirements of the inventive methods, the inventive methods can be implemented in hardware or in software. The implementation can be performed using a digital storage medium, in particular, a flash memory, a disc, a CD or a DVD having an electronically readable control signal stored thereon, which cooperates with a programmable computer system, such that the inventive methods are performed. Generally, the present invention is, therefore, a computer program product with a program code stored on a machine-readable carrier, the program code being operative for performing the inventive methods when the computer program product runs on a computer. In other words, the inventive methods are, therefore, a computer program having a program code for performing at least one of the inventive methods when the computer program runs on a computer.

### List of Reference Signs

- 100: Global Query Manager
- 110: First means for communicating
- 120: Object cache
- 130: Controller
- 150: Ubiquitous Gateway cache
- 160: First means for communicating
- 170: Second means for communicating
- 180: Object cache
- 190: Controller

- 302: Starting point
- 304: Return point
- 306: Start of loop
- 308: Decrease lifetime
- 310: Check lifetime
- 312: Show result to user
- 314: Delete Query
- 316: End of loop
- 318: Object search query process
- 320: Return to return point

- 322: Starting point
- 324: Receive query access or cancellation
- 326: Show result to user
- 328: Send query cancellation
- 330: Check current anchor
- 332: Send cancellation
- 334: Clear current anchor
- 336: Delete query
- 338: End

- 340: Starting point
- 342: Receive new record
- 344: Add record to GQM cache
- 346: Check current anchor
- 348: Send cancellation
- 350: Clear current anchor
- 352: End

- 354: Starting point
- 356: Receive anchor search failure
- 358: Send cancellation
- 360: Clear current anchor
- 362: End

- 400: Anchor searching phase
- 401: Newest record tracking phase
- 402: Query installing phase
- 403: Starting point
- 404: Try to get record
- 406: Check hit record
- 408: Check current anchor
- 410: Select random UG
- 412: End
- 414: Check hit record
- 416: Set hit record
- 418: Select non-installed UG
- 420: Start loop
- 422: Check sample limit
- 424: Try to get record
- 426: Check newer records
- 428: End of loop

- 430: Return to start
- 432: Store record
- 434: Return to start
- 436: Check last selected UG
- 438: Select non-installed UG
- 440: Select sum UG
- 442: Mark all UGs
- 444: Clear last selected UG
- 446: Check current anchor
- 448: Select UG

- 500: Starting point
- 502: Return point
- 504: Clear found objects and found UGs
- 506: Check object period
- 508: Check nearby objects
- 510: Check UG period
- 512: Check nearby UGs
- 514: Decrease periods
- 516: Start of loop
- 518: Decrease lifetime
- 520: Check lifetime
- 522: Delete query
- 524: Check query
- 526: Object search
- 528: Anchor search
- 530: End of loop
- 532: Return to return point
- 534: Starting point
- 536: Receive query cancellation
- 538: Set query cancellation
- 540: Delete query
- 542: End

- 600: Starting point
- 602: Object and UG checking phase
- 604: Newer record checking phase
- 606: Check found object
- 608: Notify originator
- 610: Send query cancellation
- 612: Delete query
- 614: Go to end
- 616: Check found UG
- 618: Check query
- 620: Copy query
- 622: Check new record
- 624: End
- 626: Report new record

- 700: Starting point
- 702: Check newer record
- 704: Send record
- 706: Send query cancellation
- 708: Delete query
- 710: End
- 712: Check query hop limit
- 714: Send query failure
- 716: Copy query

- 802: Ubiquitous Gateway
- 804: Ubiquitous Gateway
- 806: Object cache
- 808: Global Query Manager
- 810: Ubiquitous Gateway location database

- 820: Global Query Manager
- 822: Select random UG as first anchor UG
- 824: Ubiquitous Gateway
- 826: Ubiquitous Gateway
- 828: Ubiquitous Gateway
- 830: Ubiquitous Gateway
- 832: Ubiquitous Gateway
- 834: Notify next anchor point
- 836: Last seen location
- 838: Ask newer record to UG around anchor point
- 840: Ask newer record to UG around anchor point
- 842: Ask newer record to UG around anchor point
- 844: Ubiquitous Gateway
- 846: Ubiquitous Gateway
- 848: Ubiquitous Gateway
- 850: Notify newer record
- 852: Last seen location, next anchor point
- 854: Ubiquitous Gateway
- 856: Ubiquitous Gateway
- 858: Ubiquitous Gateway
- 860: Inside query

- 870: Local Query Manager
- 872: Ubiquitous Gateway
- 874: Ubiquitous Gateway
- 876: Ubiquitous Gateway
- 878: Ubiquitous Gateway

- 880: Ask for object
- 882: Object was seen
- 884: Ask newer record about object
- 886: No newer record available

## Claims

1. A Global Query Manager (100) for operating in a mobile communication network having a plurality of Ubiquitous Gateways, a Ubiquitous Gateway being a mobile device adapted for communicating in the mobile communication network and for storing object records, comprising:
a means (110) for communicating with the plurality of Ubiquitous Gateways and being adapted for detecting an object record received from a Ubiquitous Gateway;
an object cache (120) for temporarily storing an object record reported by a Ubiquitous Gateway, the object record comprising an object record identification, an object identification and an object location;
a controller (130) for receiving a record request for a query object from a query origin and being adapted for forwarding the record request to a query Ubiquitous Gateway,
wherein the controller (140) is adapted for selecting the query Ubiquitous Gateway based on an object record from the object cache (120).

2. The Global Query Manager (100) of claim 1, wherein the controller (130) is adapted for randomly selecting the query Ubiquitous Gateway when no object record on the query object is present in the object cache (120).

3. The Global Query Manager (100) of one of the claims 1 or 2, wherein the object cache (120) is adapted for further storing one of or a combination of the group of a Ubiquitous Gateway record on a Ubiquitous Gateway which has reported an object record, a time stamp of the object last seen time, a period during which the object has continuously been monitored by a Ubiquitous Gateway, an estimated last seen position, whether the object is movable or not movable, a history of Ubiquitous Gateways that have exchanged the object record or a number of hops the object record has propagated.

4. The Global Query Manager (100) of one of the claims 1 to 3, wherein the controller (130) is adapted for selecting the query Ubiquitous Gateway based on the Ubiquitous Gateway, which reported the object record on the query object.

5. The Global Query Manager (100) of one of the claims 1 to 4, wherein the controller (130) is adapted for selecting the query Ubiquitous Gateway based on a query object location stored in the object cache (120).

6. The Global Query Manager (100) of one of the claims 1 to 5, wherein the controller (130) is adapted for installing a search query for the query object at the query Ubiquitous Gateway, the query Ubiquitous Gateway using NFC to request an object record on the query object from another Ubiquitous Gateway or the query object as a response to the installed search query, wherein the search query instructs a Ubiquitous Gateway to proactively search for the query object.

7. The Global Query Manager (100) of one of the claims 1-6,
wherein the controller (130) is adapted for receiving an object record based on a forwarding of the record request from the query Ubiquitous Gateway to another Ubiquitous Gateway, the other Ubiquitous Gateway also forwarding the record request.

8. The Global Query Manager (100) of one of the claims 1 to 7, wherein the controller (130) is adapted for associating a lifetime with the record request and for notifying the query origin when the lifetime of the record request has expired.

9. The Global Query Manager (100) of one of the claims 1 to 8, wherein the controller (130) is adapted for forwarding the record request to query Ubiquitous Gateways, which are likely to have a newer object record on the query object than the object record on the query object from the object cache (120).

10. The Global Query Manager (100) of one of the claims 1 to 9, wherein the controller (130) is adapted for forwarding the record request to Ubiquitous Gateways being located in a vicinity of a query object location, the vicinity being determined by the mobile communication network or from the object cache (120).

11. The Global Query Manager (100) of one of the claims 1 to 10, wherein the controller (130) is adapted for forwarding the record request to a predetermined number of query Ubiquitous Gateways.

12. The Global Query Manager (100) of one of the claims 6 to 11, wherein the controller (130) is adapted for installing the search query to a predetermined number of Ubiquitous Gateways.

13. The Global Query Manager (100) of one of the claims 1 to 12, wherein the controller (130) is adapted for providing a newest query object location to the query origin.

14. The Global Query Manager (100) of one of the claims 1 to 13, wherein the query origin corresponds to a Ubiquitous Gateway or a network node of the mobile communication network.

15. The Global Query Manager (100) of one of the claims 1 to 14, wherein the means (110) for communicating is adapted for communicating according to GSM (GSM = Global System for Mobile Communication), UMTS (UMTS = Universal Mobile Telecommunication System), LTE (LTE = Long Term Evolution), FOMA (FOMA = Freedom of Mobile multimedia Access) and/or WLAN (WLAN = Wireless Local Area Network).

16. The global query manager (100) of one of the claims 1-16,
wherein the means (110) for communicating is adapted for communicating using a communication protocol, wherein the communication protocol is such that the query object can not communicate using the communication protocol.

17. A method for querying a Ubiquitous Gateway in a mobile communication network comprising a plurality of Ubiquitous Gateways, a Ubiquitous Gateway being a mobile device adapted for communicating in the mobile communication network and for storing an object record, comprising the steps of:
communicating with the plurality of Ubiquitous Gateways;
temporarily storing an object record reported by a Ubiquitous Gateway, the object record comprising an object record identification, an object identification and an object location;
receiving a record request for a query object from a query origin;
forwarding the record request to a query Ubiquitous Gateway, the query Ubiquitous Gateway being selected based on an object record; and
reporting an object record on the query object to the query origin.

18. A computer program having a program code for performing the method of claim 17, when the program code runs on a processor.

19. A Ubiquitous Gateway (150) for communicating in a mobile communication network, the mobile communication network having a plurality of Ubiquitous Gateways, comprising:
a first means (160) for communicating with the mobile communication network;
a second means (170) for communicating with other Ubiquitous Gateways and for communicating with an object, an object having an object identification, wherein the second means (170) for communicating is adapted for detecting an object record received from an object;
an object cache (180) for temporarily storing an object record comprising an object record identification, an object identification and an object location; and
a controller (190) for repetitively monitoring objects through the second means (170) for communicating and adapted for storing an object record of monitored objects in the object cache (180),
wherein the controller (190) is further adapted for receiving a record request from the mobile communication network on a query object, and
wherein the controller (190) is further adapted for providing an object record on the query object from the object cache (180) to the mobile communication network through the first means (160) for communicating.

20. The Ubiquitous Gateway (150) of claim 19, wherein the object cache (180) is adapted for storing an object time stamp on when an object was last monitored.

21. The Ubiquitous Gateway (150) of one of the claims 19 or 20, wherein the controller (190) is adapted for exchanging the object cache (180) with other Ubiquitous Gateways through the second means (170) for communicating.

22. The Ubiquitous Gateway (150) of one of the claims 19 to 21, wherein the object cache (180) is adapted for storing a Ubiquitous Gateway identification of a Ubiquitous Gateway which has monitored an object.

23. The Ubiquitous Gateway (150) of one of the claims 19 to 22, wherein the object cache (180) is adapted for storing a belonging period of an object, the belonging period indicating how long an object was monitored.

24. The Ubiquitous Gateway (150) of one of the claims 19 to 23, wherein the object cache (180) is adapted for storing an information on whether an object is moving or non-moving.

25. The Ubiquitous Gateway (150) of one of the claims 19 to 24, wherein the object cache (180) is adapted for storing a route on which an object record was reported.

26. The Ubiquitous Gateway (150) of one of the claims 19 to 25, wherein the object cache (180) is adapted for storing a number of hops indicating through how many hops an object record was reported.

27. The Ubiquitous Gateway (150) of one of the claims 19 to 26, further comprising a Ubiquitous Gateway cache for storing a Ubiquitous Gateway record, the Ubiquitous Gateway record comprising a Ubiquitous Gateway record identification or a Ubiquitous Gateway identification and optionally one of or a combination of the group of a Ubiquitous Gateway last seen time, an estimated last seen position, an average Ubiquitous Gateway speed, a standard deviation of a Ubiquitous Gateway speed, a history of Ubiquitous Gateways having forwarded the Ubiquitous Gateway record or a hop number the Ubiquitous Gateway record was reported through.

28. The Ubiquitous Gateway (150) of claim 27, wherein the controller (190) is adapted for reporting the Ubiquitous Gateway record from the Ubiquitous Gateway cache through the second means (170) for communicating to another Ubiquitous Gateway.

29. The Ubiquitous Gateway (150) of one of the claims 27 or 28, wherein the controller (190) is adapted for receiving a Ubiquitous Gateway record from a Ubiquitous Gateway, and for updating the Ubiquitous Gateway cache with the Ubiquitous Gateway record received.

30. The Ubiquitous Gateway (150) of one of the claims 19 to 29, wherein the controller (190) is adapted for receiving a search query for a query object from a search query origin and for forwarding the search query to other Ubiquitous Gateways through the second means (170) for communicating, wherein the controller (190) is further adapted for attempting to communicate with the query object, wherein the search query instructs the Ubiquitous Gateway (150) to proactively search for the query object.

31. The Ubiquitous Gateway (150) of claim 30, wherein the search query origin corresponds to another Ubiquitous Gateway or a Global Query Manager being a network entity in the mobile communication network.

32. The Ubiquitous Gateway (150) of one of the claims 30 or 31, wherein the controller (190) is adapted for providing the object record on the query object to the search query origin.

33. The Ubiquitous Gateway (150) of one of the claims 19 to 32, wherein the controller (190) is adapted for selecting a newest object record for providing when multiple object records on the query object are available.

34. The Ubiquitous Gateway (150) of one of the claims 19 to 33, wherein the controller (190) is adapted for storing Ubiquitous Gateway identifications of Ubiquitous Gateways to which a record request has been forwarded and requesting cancellation of the record request to all Ubiquitous Gateways to which the record request was forwarded when the query object is found or the record query is cancelled.

35. The Ubiquitous Gateway (150) of one of the claims 19-34,
wherein the controller (190) is adapted for establishing a limit on how many times a search query can be forwarded.

36. The Ubiquitous Gateway (150) of one of the claims 19-35, further comprising a means for determining its own position.

37. The Ubiquitous Gateway (150) of claim 37, wherein the means for determining its own position comprises a GPS-receiver (GPS = Global Positioning System).

38. The Ubiquitous Gateway (150) of one of the claims 19-37, further comprising a Bloom filter being prepared with object records and Ubiquitous Gateway records.

39. The Ubiquitous Gateway (150) of one of the claims 19 to 38
wherein the first means (160) for communicating is adapted for communicating in a cellular mobile communication network.

40. The Ubiquitous Gateway (150) of claim 39, wherein the mobile communication network is a GSM, UMTS, LTE, FOMA, or WLAN network.

41. The Ubiquitous Gateway (150) of one of the claims 19 to 40, wherein the second means (170) is adapted for using Bluetooth, WLAN, RFID (RFID = Radio Frequency Identification), IR (IR = Infrared), or ISM (ISM = Industrial, Scientific or Medical radio bands).

42. The Ubiquitous Gateway (150) of one of the claims 19 to 41, wherein the means (160) for communicating with the mobile communication network is adapted for communicating using a communication protocol, wherein the communication protocol is such that the query object can not communicate using the communication protocol.

43. A method for communicating in a mobile communication network, the mobile communication network comprising a plurality of Ubiquitous Gateways, comprising the steps of:
communicating with the mobile communication network;
communicating with the plurality of Ubiquitous Gateways;
communicating with an object, an object having an object identification;
temporarily storing an object record, the object record having an object record identification, an object identification and an object location as an object record;
monitoring objects through communication with objects;
storing object records of monitored objects;
repetitively exchanging object records with Ubiquitous Gateways;
receiving a record request from the mobile communication network on a query object; and
providing an object record on the query object to the mobile communication network.

44. A computer program having a program code for performing the method of claim 43, when the program code runs on a processor.

45. System comprising a Global Query Manager according to one of the claims 1 to 16, and a Ubiquitous Gateway according to one of the claims 19 to 42.

## Amended claims

### Amended claims in accordance with Rule 137(2) EPC.

**1.** A Global Query Manager (100) for operating in a mobile communication network having a plurality of Ubiquitous Gateways, a Ubiquitous Gateway being a mobile device adapted for communicating in the mobile communication network and for storing an object record, the object record comprising an object record identification, an object identification and an object location comprising:
means (110) for communicating with the plurality of Ubiquitous Gateways and being adapted for detecting the object record received from a Ubiquitous Gateway;
an object cache (120) for temporarily storing the object record reported by the Ubiquitous Gateway, the object record comprising the object record identification, the object identification and the object location;
a controller (130) for receiving a record request for a query object from a query origin and being adapted for forwarding the record request to an anchor Ubiquitous Gateway,
wherein the controller (130) is adapted for selecting the anchor Ubiquitous Gateway based on the object record from the object cache (120) or for randomly selecting the anchor Ubiquitous Gateway when no object record on the query object is present in the object cache (120),
wherein the controller (130) is further adapted for receiving an other object record from the anchor Ubiquitous Gateway and for forwarding the record request to a query Ubiquitous Gateway, the query Ubiquitous Gateway being selected based on the other object record.

**2.** The Global Query Manager (100) of claim 1, wherein the controller (130) is adapted for sending a search query for the query object to the query Ubiquitous Gateway, the search query comprising a hop limit, the query Ubiquitous Gateway uses NFC to request the object record on the query object from a further Ubiquitous Gateway as a response to the search query, the hop limit being a variable to count the remaining times the search query can be forwarded.

**3.** The Global Query Manager (100) of one of the claims 1 or 2, wherein the object cache (120) is adapted for further storing one of or a combination of the group of a Ubiquitous Gateway record on a Ubiquitous Gateway which has reported an object record, a time stamp of the object last seen time, a period during which the object has continuously been monitored by a Ubiquitous Gateway, an estimated last seen position, whether the object is movable or not movable, a history of Ubiquitous Gateways that have exchanged the object record or a number of hops the object record has propagated.

**4.** The Global Query Manager (100) of one of the claims 1 to 3, wherein the controller (130) is adapted for selecting the anchor Ubiquitous Gateway based on the Ubiquitous Gateway, which reported the object record on the query object.

**5.** The Global Query Manager (100) of one of the claims 1 to 4, wherein the controller (130) is adapted for selecting the anchor Ubiquitous Gateway based on a query object location stored in the object cache (120).

**6.** The Global Query Manager (100) of one of the claims 2 to 5, wherein the controller (130) is adapted for sending a search query for the query object to the query Ubiquitous Gateway, wherein the search query instructs a Ubiquitous Gateway to proactively search for the query object.

**7.** The Global Query Manager (100) of one of the claims 1 to 6, wherein the controller (130) is adapted for receiving an object record based on a forwarding of the record request from the query Ubiquitous Gateway to another Ubiquitous Gateway, the other Ubiquitous Gateway also forwarding the record request.

**8.** The Global Query Manager (100) of one of the claims 1 to 7, wherein the controller (130) is adapted for associating a lifetime with the record request and for notifying the query origin when the lifetime of the record request has expired.

**9.** The Global Query Manager (100) of one of the claims 1 to 8, wherein the controller (130) is adapted for forwarding the record request to query Ubiquitous Gateways, which are likely to have a newer object record on the query object than the object record on the query object from the object cache (120).

**10.** The Global Query Manager (100) of one of the claims 1 to 9, wherein the controller (130) is adapted for forwarding the record request to Ubiquitous Gateways being located in a vicinity of a query object location, the vicinity being determined by the mobile communication network or from the object cache (120).

**11.** The Global Query Manager (100) of one of the claims 1 to 10, wherein the controller (130) is adapted for forwarding the record request to a predetermined number of query Ubiquitous Gateways.

**12.** The Global Query Manager (100) of one of the claims 6 to 11, wherein the controller (130) is adapted for sending the search query to a predetermined number of Ubiquitous Gateways.

**13.** The Global Query Manager (100) of one of the claims 1 to 12, wherein the controller (130) is adapted for providing a newest query object location to the query origin.

**14.** The Global Query Manager (100) of one of the claims 1 to 13, wherein the query origin corresponds to a Ubiquitous Gateway or a network node of the mobile communication network.

**15.** The Global Query Manager (100) of one of the claims 1 to 14, wherein the means (110) for communicating is adapted for communicating according to GSM or Global System for Mobile Communication, UMTS or Universal Mobile Telecommunication System, LTE or Long Term Evolution, FOMA or Freedom of Mobile multimedia Access and/or WLAN or Wireless Local Area Network.

**16.** The Global Query Manager (100) of one of the claims 1 to 15, wherein the means (110) for communicating is adapted for communicating using a communication protocol, wherein the communication protocol is such that the query object can not communicate using the communication protocol.

**17.** A method performed by a Global Query Manager for querying a Ubiquitous Gateway in a mobile communication network comprising a plurality of Ubiquitous Gateways, a Ubiquitous Gateway being a mobile device adapted for communicating in the mobile communication network and for storing an object record, the object record comprising an object record identification, an object identification and an object location, comprising the steps of:
communicating with the plurality of Ubiquitous Gateways;
detecting the object record from a Ubiquitous Gateway;
temporarily storing an object record reported by the Ubiquitous Gateway, the object record comprising the object record identification, the object identification and the object location;
receiving a record request for a query object from a query origin;
forwarding the record request to an anchor Ubiquitous Gateway, the query Ubiquitous Gateway being selected based on the object record or randomly when no object record on the query object is present;
receiving an other object record from the anchor Ubiquitous Gateway; and
forwarding the record request to a query Ubiquitous Gateway, the query Ubiquitous Gateway being selected based on the other object record.

**18.** A computer program having a program code for performing the method of claim 17, when the program code runs on a processor.

**19.** A Ubiquitous Gateway (150) for communicating in a mobile communication network, the mobile communication network having a plurality of Ubiquitous Gateways, comprising:
first means (160) for communicating with the mobile communication network;
second means (170) for communicating with other Ubiquitous Gateways and for communicating with an object, the object having an object identification, wherein the second means (170) for communicating is adapted for detecting an object record received from the object;
an object cache (180) for temporarily storing the object record comprising an object record identification, the object identification and an object location; and
a controller (190) for repetitively monitoring the object through the second means (170) for communicating and adapted for storing the object record of the object in the object cache (180),
wherein the controller (190) is further adapted for receiving a record request from the mobile communication network on the object, and
wherein the controller (190) is further adapted for providing the object record on the object from the object cache (180) to the mobile communication network through the first means (160) for communicating, wherein the controller (190) is adapted for receiving a search query for the object from a search query origin and for forwarding the search query to an other Ubiquitous Gateway through the second means (170) for communicating.

**20.** The Ubiquitous Gateway (150) of claim 19, wherein the object cache (180) is adapted for storing an object time stamp on when the object was last monitored.

**21.** The Ubiquitous Gateway (150) of one of the claims 19 or 20, wherein the controller (190) is adapted for exchanging the object cache (180) with an other Ubiquitous Gateway through the second means (170) for communicating.

**22.** The Ubiquitous Gateway (150) of one of the claims 19 to 21, wherein the object cache (180) is adapted for storing a Ubiquitous Gateway identification of a Ubiquitous Gateway which has monitored the object.

**23.** The Ubiquitous Gateway (150) of one of the claims 19 to 22, wherein the object cache (180) is adapted for storing a belonging period of the object, the belonging period indicating how long the object was monitored.

**24.** The Ubiquitous Gateway (150) of one of the claims 19 to 23, wherein the object cache (180) is adapted for storing an information on whether the object is moving or non-moving.

**25.** The Ubiquitous Gateway (150) of one of the claims 19 to 24, wherein the object cache (180) is adapted for storing a route on which the object record was reported.

**26.** The Ubiquitous Gateway (150) of one of the claims 19 to 25, wherein the object cache (180) is adapted for storing a number of hops indicating through how many hops the object record was reported.

**27.** The Ubiquitous Gateway (150) of one of the claims 19 to 26, further comprising a Ubiquitous Gateway cache for storing a Ubiquitous Gateway record, the Ubiquitous Gateway record comprising a Ubiquitous Gateway record identification or a Ubiquitous Gateway identification and optionally one of or a combination of the group of a Ubiquitous Gateway last seen time, an estimated last seen position, an average Ubiquitous Gateway speed, a standard deviation of a Ubiquitous Gateway speed, a history of Ubiquitous Gateways having forwarded the Ubiquitous Gateway record or a hop number the Ubiquitous Gateway record was reported through.

**28.** The Ubiquitous Gateway (150) of claim 27, wherein the controller (190) is adapted for reporting the Ubiquitous Gateway record from the Ubiquitous Gateway cache through the second means (170) for communicating to the other Ubiquitous Gateway.

**29.** The Ubiquitous Gateway (150) of one of the claims 27 or 28, wherein the controller (190) is adapted for receiving the Ubiquitous Gateway record from the other Ubiquitous Gateway, and for updating the Ubiquitous Gateway cache with the Ubiquitous Gateway record received.

**30.** The Ubiquitous Gateway (150) of one of the claims 19 to 29, wherein the controller (190) is further adapted for attempting to communicate with the object and wherein the search query instructs the Ubiquitous Gateway (150) to proactively search for the object.

**31.** The Ubiquitous Gateway (150) of one of the claims 19 to 30, wherein the search query origin corresponds to yet another Ubiquitous Gateway or a Global Query Manager being a network entity in the mobile communication network.

**32.** The Ubiquitous Gateway (150) of one of the claims 19 to 31, wherein the controller (190) is adapted for providing the object record on the object to the search query origin.

**33.** The Ubiquitous Gateway (150) of one of the claims 19 to 32, wherein the controller (190) is adapted for selecting a newest object record for providing when multiple object records on the object are available.

**34.** The Ubiquitous Gateway (150) of one of the claims 19 to 33, wherein the controller (190) is adapted for storing Ubiquitous Gateway identifications of Ubiquitous Gateways to which a record request has been forwarded and requesting cancellation of the record request to all Ubiquitous Gateways to which the record request was forwarded when the object is found or the record query is cancelled.

**35.** The Ubiquitous Gateway (150) of one of the claims 19 to 34, wherein the search query comprises a hop limit, the hop limit being a variable to count the remaining times the search query can be forwarded, and wherein the controller (190) is adapted for establishing a limit on how many times a search query can be forwarded.

**36.** The Ubiquitous Gateway (150) of one of the claims 19 to35, further comprising a means for determining its own position.

**37.** The Ubiquitous Gateway (150) of claim 37, wherein the means for determining its own position comprises a GPS or Global Positioning System receiver).

**38.** The Ubiquitous Gateway (150) of one of the claims 19 to 37, further comprising a Bloom filter being prepared with object records and Ubiquitous Gateway records.

**39.** The Ubiquitous Gateway (150) of one of the claims 19 to 38
wherein the first means (160) for communicating is adapted for communicating in a cellular mobile communication network.

**40.** The Ubiquitous Gateway (150) of claim 39, wherein the mobile communication network is a GSM, UMTS, LTE, FOMA, or WLAN network.

**41.** The Ubiquitous Gateway (150) of one of the claims 19 to 40, wherein the second means (170) is adapted for using Bluetooth, WLAN, RFID or Radio Frequency Identification, IR or Infrared, or ISM or Industrial, Scientific or Medical radio bands.

**42.** The Ubiquitous Gateway (150) of one of the claims 19 to 41, wherein the means (160) for communicating with the mobile communication network is adapted for communicating using a communication protocol, wherein the communication protocol is such that the object can not communicate using the communication protocol.

**43.** A method performed by a Ubiquitous Gateway for communicating in a mobile communication network, the mobile communication network comprising a plurality of Ubiquitous Gateways, comprising the steps of:
communicating with the mobile communication network;
communicating with the plurality of Ubiquitous Gateways;
communicating with an object, the object having an object identification;
detecting an object record received from the object;
temporarily storing the object record, the object record having an object record identification, the object identification and an object location as;
monitoring the object;
storing the object record;
receiving a record request from the mobile communication network on the object;
providing the object record on the object to the mobile communication network;
receiving a search query for the object from a search query origin; and
forwarding the search query to an other Ubiquitous Gateway.

**44.** A computer program having a program code for performing the method of claim 43, when the program code runs on a processor.

**45.** System comprising a Global Query Manager according to one of the claims 1 to 16, and a Ubiquitous Gateway according to one of the claims 19 to 42.
